# EUROPÄISCHE PATENTSCHRIFT

(11) **EP 1 850 269 B1**
(45) Veröffentlichungstag und Bekanntmachung des Hinweises auf die Patenterteilung: **25.08.2010**
(21) Anmeldenummer: 06008795.4
(22) Anmeldetag: 27.04.2006
(51) Int. Cl.: G06K 7/10

(54) **Scanverfahren und -vorrichtung**
Scanning method and apparatus
Procédé et dispositif de balayage

(43) Veröffentlichungstag der Anmeldung: 31.10.2007
(73) Patentinhaber: SICK AG, 79183 Waldkirch (DE)
(72) Erfinder: Kaltenbach, Thomas, 79261 Gutach-Siegelau (DE); Wehrle, Klemens, 79297 Winden (DE)
(74) Vertreter: Manitz, Finsterwald & Partner GbR

(56) Entgegenhaltungen:
- EP-A- 1 398 729
- EP-A1- 1 079 322
- DE-A1- 1 472 447
- DE-A1- 10 226 663
- DE-B- 1 099 244
- US-A- 5 597 997
- US-A1- 2001 035 489

## Beschreibung

Die Erfindung betrifft Scanverfahren zum optischen Abscannen wenigstens einer Teiloberfläche eines Körpers, bei welchen der Körper von wenigstens einer Beleuchtungseinheit beleuchtet wird und wenigstens eine Lichtempfangseinheit von der Beleuchtungseinheit auf den Körper gesendetes und von dem Körper reflektiertes Licht empfangen kann, so dass durch die Beleuchtungseinheit und die Lichtempfangseinheit ein Scanbereich einer die Beleuchtungseinheit und die Lichtempfangseinheit umfassenden Scaneinheit definiert wird, und Scanvorrichtungen zur Durchführung solcher Scanverfahren.

Zum optischen Aufnehmen bzw. Abscannen von Körpern werden Kameras bzw. Scaneinheiten eingesetzt, die eine Beleuchtungseinheit aufweisen. Die Intensität der Beleuchtungseinheit ist auf die Erfordernisse der Kamera bzw. der Applikation abgestimmt. Eine Scaneinheit umfasst dabei jeweils eine Beleuchtungseinheit und eine Lichtempfangseinheit, wie sie zum Beispiel in US 6,628,445 B2 beschrieben ist.

Zum Beispiel zum Auslesen eines Barcodes werden heutzutage 6-Seitenlesungen eingesetzt. Die Lichtstrahlen von vier Seitenkameras bzw. -scaneinheiten laufen unter einem Winkel (zum Beispiel unter 45°) zur Förderrichtung eines Transportbandes, auf dem ein Körper durch den Lesebereich geführt wird. Durch die schräge Ausrichtung der vier Seitenkameras wird gewährleistet, dass, unabhängig von der Lage des Körpers, jede Seite des Körpers abgebildet werden kann. Für die obere und untere Seite des Körpers sind ebenfalls Kameras bzw. Scaneinheiten vorgesehen.

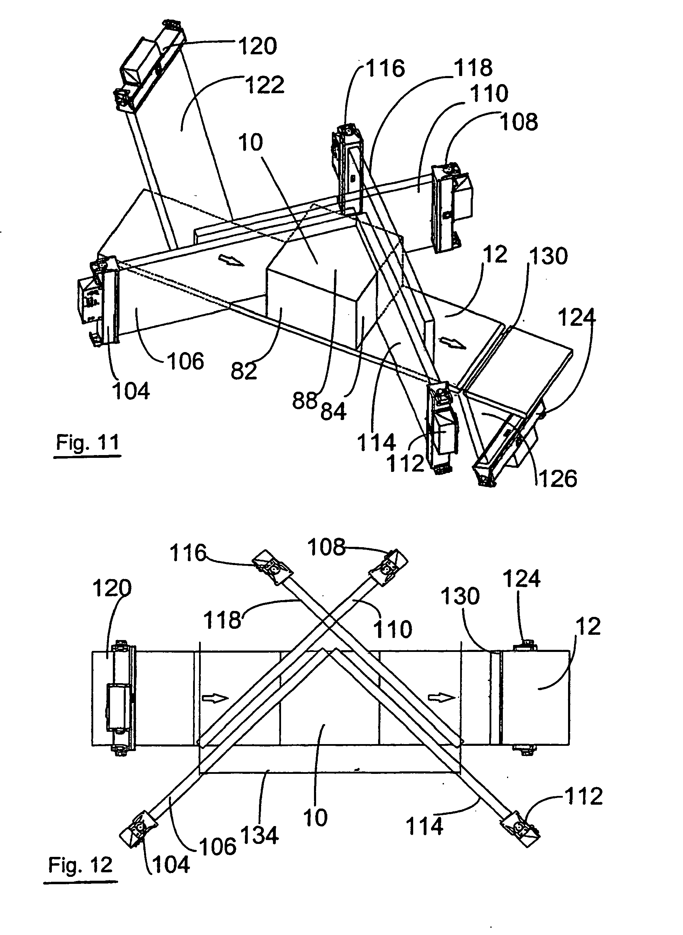

Es muss vermieden werden, dass sich die Beleuchtungseinheiten der einzelnen Scaneinheiten gegenseitig beeinflussen. Insbesondere sollte vermieden werden, dass es zu einer Mehrfachbelichtung des abzuscannenden Bereichs durch mehrere Scaneinheiten kommt. Bei bekannten Lösungen wird dies durch die räumliche Trennung der von den Beleuchtungseinheiten der einzelnen Scaneinheiten erzeugten Lichtstrahlen innerhalb des Lesefeldes ausgeschlossen, wie es in den Fig. 11 und 12 gezeigt ist. Fig. 11 zeigt in schematischer und perspektivischer Darstellung die Anordnung einer 6-Seitenlösung zur Identifikation eines Barcodes auf der Oberfläche eines Körpers 10, der auf der Fördereinrichtung 12 durch die Leseeinrichtung geführt wird. Sechs Scaneinheiten 104, 108, 112, 116, 120, 124 umfassen jeweils eine Beleuchtungseinheit, die Licht in Richtung eines Lesefeldes schicken und z.B. durch LED-Zeilen gebildet sein können, siehe US 6,628,445 B2. Die Scaneinheiten umfassen außerdem jeweils eine Lichtempfangseinheit, die gegebenenfalls von dem Körper reflektiertes Licht empfangen kann. Sie besteht zum Beispiel aus einer Zeile von CMOS- oder CCD-Sensoren. Auf diese Weise definieren die Scaneinheiten 104 bis 124 balkenförmig angedeutete Scanbereiche 106, 110, 114, 118, 122 bzw. 126, die derart ausgerichtet sind, dass jede Oberfläche des Körpers abgescannt werden kann. Zwei der zu scannenden Seitenflächen sind in Fig. 11 mit Bezugszeichen 82 und 84 bezeichnet. Die von der Scaneinheit 120 abzuscannende obere Fläche ist mit Bezugszeichen 88 bezeichnet. Der Scanbereich 126 der unteren Scaneinheit 124 erstreckt sich beim gezeigten Beispiel durch eine Unterbrechung 130 der Fördereinrichtung 12.

In Fig. 12 ist gezeigt, wie insbesondere die vier Seitenscaneinheiten 104, 108, 112, 116 derart angeordnet sind, dass sich in dem Lesefeld 134 die Lichtstrahlen der einzelnen Beleuchtungseinheiten nicht überlappen. Das Lesefeld muss dazu eine entsprechende Länge aufweisen. Durch die räumliche Trennung der Lichtstrahlen ist ein entsprechend großes mechanisches Systemdesign zum Scannen notwendig, das sich über einen langen Bereich der Transportfläche bzw. Fördertechnik erstreckt. Daher sind hohe Anforderungen an die Konstanz der Bedingungen in dem großen Lesefeld gestellt. Insbesondere müssen bei Vorhandensein mehrerer Förderbandsegmente die Geschwindigkeiten der einzelnen Segmente derart synchronisiert werden, dass sie mit gleicher Geschwindigkeit laufen, was sehr hohe Anforderungen an das Systemdesign stellt. Insbesondere ist dies kaum praktikabel, wenn das Gewicht der einzelnen Körper einen Einfluss auf die Transportbandgeschwindigkeit einzelner Segmente hat.

Unabhängig davon ist generell die Verhinderung von Überbelichtung, zum Beispiel durch Reflexionen oder Blendungen an der Oberfläche des abzuscannenden Körpers, bzw. einer daraus resultierenden Verschlechterung der Bildqualität wünschenswert.

Bei einem gattungsgemäßen Scanverfahren zum optischen Abscannen wenigstens einer Teiloberfläche eines Körpers wird der Körper von wenigstens einer Beleuchtungseinheit beleuchtet. Wenigstens eine Lichtempfangseinheit kann Licht empfangen, das von der Beleuchtungseinheit auf den Körper gesendet und von dem Körper reflektiert wird. Die Beleuchtungseinheit und die Lichtempfangseinheit definieren einen Scanbereich einer die Beleuchtungseinheit und die Lichtempfangseinheit umfassenden Scaneinheit. Eine gattungsgemäße Scanvorrichtung zur Durchführung eines solchen Verfahrens weist wenigstens eine Beleuchtungseinheit zur Beleuchtung wenigstens eines Teiles eines Lesefeldes, wenigstens eine Lichtempfangseinheit zum Empfang von aus dem Lesefeld ggf. reflektierten Lichtes und zur Erzeugung eines Empfangssignales und eine Auswerteeinheit zum Auswerten des Empfangssignales auf. Durch den Lichtweg von der Beleuchtungseinheit zur Lichtempfangseinheit wird ein Scanbereich einer Scaneinheit definiert.

Ein optisches Informationslesegerät für Barcodes mit einem Helligkeitsdetektor zur Messung der Helligkeit des reflektierten Lichts ist aus US 5,597,997 A bekannt, wobei die Helligkeit der Scanlichtquelle und/oder die Auslesebedingungen an die Lichtverhältnisse angepasst werden können.

Der nächste Stand der Technik, EP 1 079 322 A1 betrifft ein Verfahren und eine Vorrichtung zum Identifizieren oder zur Positionsbestimmung von mit Transponder versehenen Objekten, bei denen das Objekt zusätzlich durch zumindest einen optischen Sensor abgetastet wird. Zur Identifizierung bzw. Positionsbestimmung werden die optischen Daten mit den Transponderdaten kombiniert. Zwei Strichcodeleser dienen dem Auslesen von Codes, die auf mittels eines Förderbandes bewegten Objekten aufgebracht sind. Die Abtastlinien der Strichcodeleser überkreuzen sich.

Es ist die Aufgabe der vorliegenden Erfindung, Scanverfahren und Scanvorrichtungen anzugeben, mit deren Hilfe der konstruktive Aufwand und/oder der Platzbedarf verringert werden kann.

Diese Aufgabe wird durch ein Scanverfahren mit den Merkmalen des Anspruches 1 bzw. eine Scanvorrichtung mit den Merkmalen des Anspruches 19 gelöst. Vorteilhafte Weiterbildungen sind Gegenstand von Unteransprüchen.

Bei einem ersten erfindungsgemäßen Scanverfahren werden wenigstens zwei Scaneinheiten mit jeweils einem Scanbereich verwendet, die sich in einem Überlappungsbereich wenigstens teilweise überlappen. Um zu verhindern, dass es in dem Überlappungsbereich zu Überbelichtungen kommt, wird zumindest dann, wenn der Körper mit seiner Oberfläche in einem Überlappungsbereich ist, die Scanempfindlichkeit wenigstens einer der Scaneinheiten zumindest für den Überlappungsbereich vermindert.

Durch die Verwendung von sich im Lesefeld überlappenden Scanbereichen ist die räumliche Trennung der von den Beleuchtungseinheiten der Scaneinheiten erzeugten Lichtstrahlen innerhalb des Lesefeldes nicht notwendig. Die einzelnen Scanbereiche überlappen sich im Lesefeld, so dass die Scaneinheiten näher zueinander rücken können. Das Systemdesign kann kleiner sein und die Anforderungen an die Konstanz der Bedingungen in dem Lesefeld können geringer sein.

Dadurch, dass zumindest dann, wenn der Körper mit einer Oberfläche in dem Überlappungsbereich der Scanbereiche ist, die Scanempfindlichkeit wenigstens einer der betroffenen Scaneinheiten vermindert wird, ist die Gefahr eines negativen Einflusses durch eine Überbelichtung durch die gleichzeitige Beleuchtung durch zwei oder mehrere Beleuchtungseinheiten gebannt.

Das erfindungsgemäße Scanverfahren ermöglicht also eine kompaktere Bauform ohne dass die Gefahr einer Überbelichtung in einzelnen Bereichen bestünde.

Eine erste erfindungsgemäße Scanvorrichtung weist zur Durchführung des erfindungsgemäßen Scanverfahrens dieser Ausgestaltung wenigstens zwei Scaneinheiten mit wenigstens zwei teilweise überlappenden Scanbereichen auf. Eine Steuereinheit ist vorgesehen, die die Scanempfindlichkeiten der Scaneinheiten mit zumindest teilweise überlappendem Scanbereich zumindest dann, wenn der Körper mit seiner Oberfläche in dem Überlappungsbereich ist, vermindert.

Bei einer bevorzugten Ausgestaltung des Verfahrens wird die Lage und/oder die Ausrichtung und/oder die Geometrie des Körpers in Bezug auf wenigstens eine der Scaneinheiten bestimmt. Aus der Kenntnis der Lage und/oder Ausrichtung und/oder der Geometrie kann zum Beispiel bestimmt werden, wann sich der Körper mit seiner Oberfläche in dem Überlappungsbereich wenigstens zweier Scaneinheiten befindet.

Das Verfahren und die Vorrichtung sind besonders wirkungsvoll einzusetzen, wenn der Körper und die Scaneinheiten sich relativ zueinander bewegen, insbesondere, wenn der Körper auf einer Fördereinrichtung durch das Lesefeld bewegt wird. Aus der Lage und/oder der Ausrichtung und/oder der Geometrie des Körpers auf der Fördereinrichtung kann dann zum Beispiel bei in der Regel bekannter Fördergeschwindigkeit zusätzlich bestimmt werden, wann der Körper mit einer seiner Oberflächen in das Lesefeld bzw. einen oder mehrere Scanbereiche eintritt.

Die Lage und/oder die Ausrichtung und/oder die Geometrie des Körpers können während dessen Weg durch die Scanbereiche bestimmt werden. Besonders vorteilhaft ist es, wenn die Lage und/oder die Ausrichtung und/oder die Geometrie des Körpers bestimmt wird, bevor sich der Körper in den Überlappungsbereich befindet.

Kenntnis der Lage und/oder der Ausrichtung und/oder der Geometrie des Körpers ermöglicht also eine Optimierung des Abscanvorgangs in Abhängigkeit dieser Parameter. Zur Bestimmung der Lage kann zum Beispiel ein Verfahren eingesetzt werden, wie es aus DE 102 26 663 A1 bekannt ist.

Eine entsprechende Scanvorrichtung weist eine Ermittlungseinrichtung zur Ermittlung der Lage und/oder der Ausrichtung und/oder der Geometrie eines zu scannenden Körpers in Bezug auf die wenigstens eine Beleuchtungseinheit und/oder die wenigstens eine Lichtempfangseinheit auf. Bei einer bevorzugten Ausführungsform ist die Ermittlungseinrichtung stromaufwärts des Lesefeldes angeordnet, so dass eine Bestimmung der Lage und/oder der Ausrichtung und/oder der Geometrie des Körpers auf einem Transportband festgestellt werden kann, bevor der Körper in die überlappenden Scanbereiche eintritt.

Bei einer anderen bevorzugten Ausgestaltung des erfindungsgemäßen Scanverfahrens wird während des Abscanvorganges geprüft, ob an einer Lichtempfangseinheit einer Scaneinheit ein Bereich mit einer Überbelichtung vorliegt. Ist dies der Fall, wird entweder die Intensität wenigstens eines Teiles einer Beleuchtungseinheit wenigstens einer Scaneinheit, die den überbelichteten Bereich beleuchtet, oder die Empfangsempfindlichkeit wenigstens eines Teiles einer Lichtempfangseinheit wenigstens einer Scaneinheit, die Licht aus diesem Bereich empfängt, vermindert. Eine entsprechende Ausführungsform der erfindungsgemäßen Scanvorrichtung weist dazu eine Einrichtung zur Bestimmung der Beleuchtungsstärke an wenigstens einem Teil wenigstens einer Lichtempfangseinheit auf. Außerdem ist eine Steuereinheit vorgesehen, die aus den Informationen der Lichtempfangseinheit die Scanvorrichtung derart steuert, dass sie die Scanempfindlichkeit der betroffenen Scaneinheiten entsprechend reguliert.

Ein Scanverfahren und eine Scanvorrichtung gemäß diesen Ausgestaltungen stellen wirksam sicher, dass die Bildqualität nicht durch eine Überbelichtung negativ beeinflusst werden würde. Insbesondere wenn es aufgrund der Mehrfachbeleuchtung eines Oberflächenbereiches des Körpers in überlappenden Scanbereichen zu einer Überbelichtung an einer Lichtempfangseinheit kommt, wird bei dieser Ausgestaltung die Scanempfindlichkeit der betroffenen Scaneinheiten derart reguliert, dass die Bildqualität trotzdem ausreichend ist.

Als zusätzlichen günstigen Nebeneffekt sorgt eine solche Ausgestaltung auch bei Überbelichtung aufgrund von anderen Effekten, zum Beispiel Reflexionen, für eine entsprechende Herunterregelung der Scanempfindlichkeiten.

Zur Verringerung der Scanempfindlichkeit für einen überbelichteten Bereich oder für einen Überlappungsbereich können bei den Ausgestaltungen der Erfindung unterschiedliche Methoden verwendet werden, z.B. eine Verkürzung der Belichtungszeit.

Es ist z.B. möglich, dass die Scanempfindlichkeit aller Scaneinheiten, die den Überlappungsbereich abscannen, gleichmäßig verringert wird. Bei einer anderen Ausgestaltung wird die Intensität wenigstens desjenigen Teiles einer Beleuchtungseinheit herabgesetzt, die den Überlappungsbereich beleuchtet. Bereits die Verringerung der Beleuchtungsintensität einer den Überlappungsbereich treffenden Beleuchtungseinheit kann dabei ausreichen, um eine Überbelichtung zu vermeiden. Dabei ist es nur notwendig, dass derjenige Teil der Beleuchtungseinheit in seiner Intensität verringert wird, der den Überlappungsbereich beleuchtet. Dies kann z.B. durch Herabsetzen der Intensität eines Teils einer LED-Zeile erreicht werden. Gegebenenfalls ist es auch möglich, zumindest denjenigen Teil einer Beleuchtungseinheit zu deaktivieren, der den Überlappungsbereich beleuchtet.

Bei einer anderen Ausgestaltung wird die Empfangsempfindlichkeit wenigstens desjenigen Teils einer Lichtempfangseinheit vermindert, auf den reflektiertes Licht aus dem Überlappungsbereich der Scanbereiche fällt. Durch Verminderung der Empfangsempfindlichkeit ist sichergestellt, dass es zu keiner die Bildqualität verschlechternden Überbeanspruchung der Lichtempfangseinheiten kommen kann, in denen reflektiertes Licht von dem Körper auftrifft, das aus dem Überlappungsbereich kommt, der von mehr als einer Beleuchtungseinheit beleuchtet wird.

Die Verringerung der Scanempfindlichkeiten kann zum Beispiel geschehen, indem die betroffenen Beleuchtungseinheiten in ihrer Intensität verringert (oder abgeschaltet) werden und/oder die Lichtempfangsempfindlichkeiten der betroffenen Lichtempfangseinheiten verringert werden.

Dabei ist es besonders vorteilhaft, wenn nur der Teil der jeweiligen Einheit entsprechend gesteuert wird, der zu dem Teil des jeweiligen Scanbereiches gehört, der von dem abzuscannenden Körper auch durchlaufen wird.

Zum Beispiel durch Kenntnis der relativen Geschwindigkeit zwischen Körper und Fördereinrichtung kann auch der Moment festgestellt werden, an dem der Körper durch einen ggf. von mehreren Scaneinheiten beleuchteten Bereich kommt. Die Anordnung kann mit diesem Wissen auch so gesteuert werden, dass die beschriebene Verringerung der Scanempfindlichkeiten nur dann geschieht, wenn die Oberfläche des Körpers durch diesen Überlappungsbereich kommt.

Eine diesen Ausgestaltungen des Verfahrens entsprechende Scanvornchtung weist z.B. eine Steuereinheit auf, die in Abhängigkeit der von der Ermittlungseinrichtung bestimmten Lage und/oder Ausrichtung und/oder Geometrie des Körpers oder in Abhängigkeit einer festgestellten Überbelichtung die Beleuchtungseinheiten bzw. die Lichtempfangseinheiten entsprechend zur Verminderung der Scanempfindlichkeit für den Überlappungsbereich steuert.

Bei einer besonderen Ausführungsform mit relativer Bewegung des Körpers und der Scaneinheiten kann die Steuereinheit zusätzlich ein Signal der Fördereinrichtung ausnutzen, das der Geschwindigkeit der Fördereinrichtung entspricht, so dass festgestellt werden kann, wann der Körper mit seiner Oberfläche durch einen Überlappungsbereich kommt.

Es ist auch möglich, dass die Empfindlichkeiten und deren ggf. notwendige Verringerung im Überlappungsbereich die Reflexionseigenschaften oder andere Oberflächenbeschaffenheiten des Körpers mit berücksichtigen.

Ein anderes erfindungsgemäßes Scanverfahren gemäß Anspruch 8 entwickelt ein erfindungsgemäßes Scanverfahren dadurch weiter, dass wenigstens eine der verwendeten Scaneinheiten derart optimal ausgestaltet und/oder angeordnet ist, dass von einer Scaneinheit ein möglichst großer Teil der Oberfläche des Körpers abgescannt werden kann.

Eine entsprechende Scanvorrichtung gemäß Anspruch 24 weist wenigstens eine Scaneinheit auf, die derart angeordnet oder ausgestaltet ist, dass mit ihr ein möglichst großer Teil der Oberfläche des Körpers abgescannt werden kann.

Ein entsprechendes Scanverfahren bzw. eine entsprechende Scanvorrichtung reduzieren die notwendige Anzahl der Scaneinheiten, so dass der konstruktive Aufwand verringert wird.

Diese erfindungsgemäßen Scanverfahren bzw. Scanvorrichtungen erweisen sich als besonders vorteilhaft, wenn einzelne oder mehrere Scanbereiche überlappen. Eine solche vorteilhafte Kombination ermöglicht die weitere Verringerung des konstruktiven Aufwandes und Platzbedarfs, da zum einen die Anzahl der notwendigen Scaneinheiten reduziert ist und zum anderen die Scanbereiche einzelner vorhandener Scaneinheiten sich überlappen können und so den Platzbedarf verringern.

Eine Weiterbildung des gemäß Anspruch 8 ausgebildeten Scanverfahrens sieht vor, dass eine Scaneinheit mit beweglichem, vorzugsweise schwenkbarem Scanbereich eingesetzt wird. Bei einem solchen Scanverfahren ist es auf einfache Weise möglich, dass eine optimale Scanrichtung und Position der Scaneinheit eingestellt wird. Dazu kann zum Beispiel Kenntnis über die Lage und/oder die Ausrichtung und/oder die Geometrie des Körpers auf einer Fördereinrichtung ausgenutzt werden.

Bei einer besonders bevorzugten Weiterbildung wird der Scanbereich derart bewegt, dass er den Körper bei einer relativen Bewegung zwischen dem Körper und der Scaneinheit folgt. Der Körper bewegt sich bei einer solchen Ausgestaltung zum Beispiel an der Scaneinheit vorbei und bietet der Scaneinheit währenddessen unterschiedliche Bereiche seiner Oberfläche zum Scannen an. Auf diese Weise ist mit einer oder wenigen Scaneinheiten ein großer Teil der Oberfläche abscanbar.

Eine entsprechende Ausführungsform der Scanvorrichtung weist dazu wenigstens eine Scaneinheit mit beweglichem, vorzugsweise schwenkbarem Scanbereich auf. Außerdem ist eine Steuereinheit vorgesehen, die derart ausgestaltet ist, ein entsprechendes Scanverfahren durchzuführen.

Bei Vorrichtungen mit feststehenden Scaneinheiten muss dafür gesorgt werden, dass bei beliebiger Lage, Ausrichtung oder Geometrie des Körpers auf jeden Fall ein maximal großer Oberflächenbereich abgescannt wird, da diese Parameter nicht bekannt sind. Bei der geschilderten bevorzugten Ausgestaltung der vorliegenden Erfindung wird die Scanrichtung und/oder die Position der Scaneinheit erst in Abhängigkeit der Lage, Ausrichtung oder Geometrie festgelegt, so dass die Oberfläche auch mit einer geringeren Anzahl von Scaneinheiten abgedeckt werden kann.

Vorzugsweise wird dazu eine Scaneinheit mit beweglichem, vorzugsweise schwenkbarem Scanbereich eingesetzt, der in Abhängigkeit der zuvor bestimmten Lage und/oder Ausrichtung und/oder Geometrie des Körpers so ausgerichtet wird, dass er einen möglichst großen Teil der Oberfläche des Körpers erfassen kann.

Eine andere Ausgestaltung, bei der eine Scaneinheit verwendet wird, die derart angeordnet und/ oder ausgerichtet ist, dass sie den Körper von mehreren Seiten scannen kann, sieht andererseits vor, dass der Körper zunächst in einen ersten Scanbereich einer ersten Scaneinheit gebracht wird und nach Verlassen dieses Scanbereichs in einen zweiten Scanbereich einer zweiten Scaneinheit gebracht wird, der ein Abscannen eines Oberflächenbereichs des Körpers ermöglicht, der nicht vollständig von dem ersten Scanbereich erfasst wurde. Die zweite Scaneinheit ist dabei derart ausgestaltet, dass sie die Beleuchtungseinheit und die Lichtempfangseinheit der ersten Scaneinheit mit benutzt und zusätzlich ein Umlenker eingesetzt wird, der von der Beleuchtungseinheit nur dann beleuchtet wird, wenn der Körper sich nicht im ersten Scanbereich befindet. Bei einer solchen Ausgestaltung wird zuerst ein erster Oberflächenbereich des Körpers direkt von der Beleuchtungseinheit der ersten Scaneinheit beleuchtet und das reflektierte Licht wird von der dazugehörigen Lichtempfangseinheit detektiert. Verlässt der Körper den ersten Scanbereich dieser Scaneinheit, trifft das Licht der Beleuchtungseinheit auf den Umlenker und wird von diesem Umlenker auf eine andere Oberfläche des Körpers gelenkt. Das von dieser Oberfläche des Körpers reflektierte Licht geht zurück zu dem Umlenker und von dort zu der Lichtempfangseinheit. Auf diese Weise wird ein zweiter Scanbereich festgelegt, der aus der Beleuchtungseinheit und der Lichtempfangseinheit der ersten Scaneinheit und dem zusätzlichen Umlenker besteht. Bei einem solchen Scanverfahren ist die Anzahl der notwendigen Beleuchtungseinheiten und Lichtempfangseinheiten kleiner, als wenn jede Scaneinheit ihre eigene Beleuchtungseinheit bzw. Lichtempfangseinheit aufweist.

Bei einer entsprechenden erfindungsgemäßen Scanvorrichtung teilen sich wenigstens eine erste und eine zweite Scaneinheit eine Beleuchtungseinheit und eine Lichtempfangseinheit, wobei der Scanbereich der zweiten Scaneinheit zusätzlich einen Umlenker, vorzugsweise einen Spiegel umfasst. Dieser ist derart angeordnet, dass er von der Beleuchtungseinheit nur dann beleuchtet wird, wenn kein Körper in dem Scanbereich der Scaneinheit ist.

Durch geschickte Anordnung des Umlenkers oder durch Verwendung von mehreren Umlenkern können auf diese Weise auch eine größere Anzahl von Scanbereichen festgelegt werden, die sich eine Beleuchtungseinheit und/oder eine Lichtempfangseinheit teilen.

Erfindungsgemäße Scanverfahren und Scanvorrichtungen können Umlenker einsetzen, insbesondere Spiegel, die den Scanbereich einer Scaneinheit örtlich festlegen, so dass der abzuscannende Körper bzw. der vorbeigeführte Körper den Scanbereich durchquert.

Bei allen erfindungsgemäßen Scanverfahren und Scanvorrichtungen können auch Strahlteiler eingesetzt werden, um das Licht einer Beleuchtungseinheit auf mehrere Scaneinheiten zu verteilen, um auf diese Weise die Anzahl der notwendigen Beleuchtungseinheiten zu reduzieren.

Grundsätzlich müssen die Beleuchtungseinheit und die Lichtempfangseinheit einer Scaneinheit nicht am selben Ort sein. Es muss nur sichergestellt sein, dass Licht, das von der Beleuchtungseinheit einer Scaneinheit auf den Körper geschickt wird und von diesem reflektiert wird, die dazu gehörige Lichtempfangseinheit erreicht. Besonders einfach ist eine Ausgestaltung, bei der die zu einer Scaneinheit gehörende Beleuchtungseinheit und Lichtempfangseinheit derart zueinander benachbart angeordnet sind, dass das von dem Körper reflektierte Licht auf seinem Weg zur Lichtempfangseinheit denselben Weg umgekehrt zurücklegt, den das Licht von der Beleuchtungseinheit zu dem Körper zurückgelegt hat.

Eine relative Bewegung zwischen dem abzuscannenden Körper und den Scaneinheit kann durch Bewegung der Scaneinheiten an einem ruhenden Körper vorbei, vorzugsweise jedoch durch die Bewegung des Körpers durch die Scanbereiche, erreicht werden.

Dies kann zum Beispiel mit einer Fördereinrichtung geschehen, die den Körper durch die Scaneinheiten führt. Zusätzlich kann gegebenenfalls eine Einrichtung zur Bestimmung der Geschwindigkeit vorgesehen sein, wenn diese zum Beispiel nicht ohnehin bekannt oder festgelegt ist.

Die erfindungsgemäßen Verfahren und Vorrichtungen eignen sich besonders zum Abscannen von Körpern, insbesondere quaderförmigen Körpern. Dabei können zum Beispiel Barcodes oder andere Codes gelesen werden. Aber auch andere Elemente auf einem Körper, wie zum Beispiel Hologramme, lassen sich so scannen. Schließlich eignen sich die erfindungsgemäßen Verfahren und Vorrichtungen auch vorteilhaft zur Aufnahme des gesamten Körpers oder Teilen davon im Sinne einer Kamera. Auf diese Weise lassen sich auch Klarschriftlesungen auf dem Körper durchführen.

Die abzuscannenden Körper können unterschiedliche Formen haben. Im vorliegenden Text wird der Begriff "Körper" auch für flächige Gebilde verwendet. Besonders eignet sich die Erfindung jedoch für quaderförmige Körper.

Die Erfindung wird anhand der beiliegenden schematischen Figuren im Detail erläutert, die spezielle Ausführungsformen und Ausgestaltungen darstellen. Dabei zeigen:
- Fig. 1: in perspektivischer Darstellung eine erste Ausgestaltung eines erfindungsgemäßen Verfahrens,
- Fig. 2: die Draufsicht auf eine Vorrichtung bei der Durchführung dieses erfindungsgemäßen Verfahrens,
- Fig. 3: eine zweite Ausgestaltung eines erfindungsgemäßen Verfahrens in perspektivischer Darstellung,
- Fig. 4: eine Draufsicht auf eine Vorrichtung bei der Durchführung der zweiten Ausgestaltung des erfindungsgemäßen Verfahrens,
- Fig. 5: eine Draufsicht zur Erläuterung eines erfindungsgemäßen Verfahrens,
- Fig. 6: in perspektivischer Darstellung eine dritte Ausgestaltung eines erfindungsgemäßen Verfahrens,
- Fig. 7: die dritte Ausgestaltung in einer anderen Verwendungsgeometrie,
- Fig. 8: in perspektivischer Darstellung verschiedene Stadien einer vierten Ausgestaltung eines erfindungsgemäßen Verfahrens,
- Fig. 9: in perspektivischer Darstellung verschiedene Zustände bei der Durchführung einer fünften Ausgestaltung eines erfindungsgemäßen Verfahrens,
- Fig. 10: eine abgewandelte Ausgestaltung der fünften Ausgestaltung dieses erfindungsgemäßen Verfahrens,
- Fig. 11: ein Scanverfahren des Standes der Technik in perspektivischer Darstellung, und
- Fig. 12: das Scanverfahren des Standes der Technik in Draufsicht.

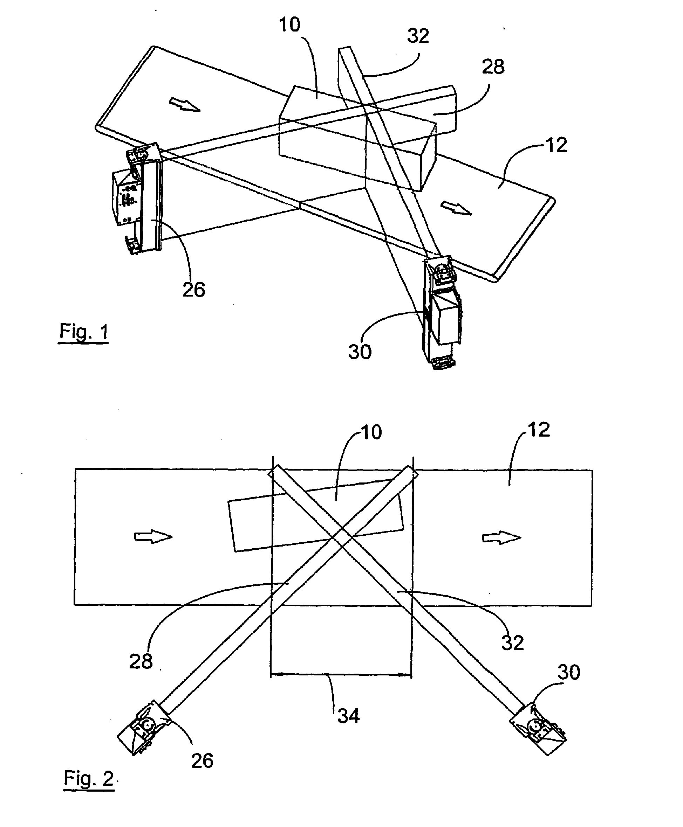

In Fig. 1 und 2 ist eine erste Ausgestaltung eines erfindungsgemäßen Verfahrens dargestellt. Ein Körper 10 bewegt sich auf dem Förderband 12 durch die Scanbereiche 28, 32 der Scaneinheiten 26, 30.

In Fig. 1 und 2 und allen folgenden Figuren ist für die Scanbereiche 16, 20, 28, 32, 38, 48, 52, 72 jeweils schematisch der Bereich in Form eines Balkens angedeutet, der von Licht der zugehörigen Scaneinheit 14, 18, 26, 30, 36, 46, 50 durchlaufen wird. Mit anderen Worten entspricht der jeweilige Scanbereich demjenigen Bereich, in dem ein abzuscannender Körper von Licht der jeweiligen Scaneinheit beleuchtet werden kann.

An sich sind bei der Ausführungsform der Fig. 1 und 2 weitere Scaneinheiten vorgesehen, die diejenigen Seiten des Körpers 10 erfassen können, die von den zwei Scaneinheiten 26, 30 nicht erfasst werden können. Insgesamt sind z.B. sechs Scaneinheiten vorgesehen, wie es auch beim Stand der Technik der Fall ist, der in den Fig. 11 und 12 dargestellt ist. Zur Erläuterung der Erfindung wurden aus Gründen der Übersichtlichkeit in den Fig. 1 und 2 exemplarisch die zwei Scaneinheiten 26 und 30 herausgegriffen.

Eine Scaneinheit 26, 30 umfasst in an sich bekannter Weise jeweils eine Zeile von Leuchtdioden, die in dem gezeigten Beispiel vertikal angeordnet sind. Benachbart dazu oder abwechselnd zu den Leuchtdioden sind in der Scaneinheit 26, 30 Lichtempfangssensoren angeordnet, z.B. eine Zeile von CCD-Sensoren oder CMOS-Sensoren.

Licht, das z.B. von einer Scaneinheit 26 in Richtung des Körpers 10 gesendet wird, durchläuft den Scanbereich 28 und wird gegebenenfalls von dem Körper 10 reflektiert. Das reflektierte Licht wird von den Sensoren in der Scaneinheit 26 detektiert. Ähnlich wirkt die Scaneinheit 30 mit dem Scanbereich 32. Zum Beispiel ein Barcode, der sich auf dem Körper 10 auf der Fläche befindet, die den Scaneinheiten 26 und 30 zugewandt ist, kann auf diese Weise ausgelesen werden.

Die Ausführungsform der Fig. 1 und 2 nutzen die Kenntnisse über die Lage, die Ausrichtung und/oder die Geometrie des Körpers 10 auf dem Förderband 12 aus, um eine Überbelichtung zu vermeiden. Die Scanbereiche 28, 32 der Scaneinheiten 26, 30 überlappen, wie es in Fig. 1 und 2 erkennbar ist. Anders als im Stand der Technik, der in den Fig. 11 und 12 dargestellt ist, sind die Scaneinheiten und die entsprechenden Scanbereiche 28, 32 so ausgerichtet, dass der Körper 10 auch durch den Überlappungsbereich läuft.

In nicht gezeigter Weise sind die Scaneinheiten 26, 30 mit einer Steuereinheit verbunden, die einzelne Bereiche der Scaneinheiten beeinflussen können, z.B. einzelne LEDs in ihrer Intensität verringern oder ausschalten. Bei anderen Ausgestaltungen sind einzelne Empfangssensoren in ihrer Empfindlichkeit verringerbar.

Andere Scaneinheiten, die z.B. auf der gegenüberliegenden Seite des Förderbandes 12 oder oberhalb und unterhalb des Förderbandes 12 angeordnet sind, sind ähnlich aufgebaut und angeordnet. Insbesondere weisen diese Scaneinheiten auch überlappende Scanbereiche auf.

Stromaufwärts der Scaneinheiten ist eine Ermittlungseinrichtung vorgesehen, die in den Figuren nicht gezeigt ist. Sie dient der Ermittlung der Lage, der Ausrichtung und/oder der Geometrie des Körpers 10 bevor er die Scanbereiche 28, 32 erreicht. Die Ermittlung kann zum Beispiel ein an sich bekanntes Verfahren verwenden, wie es in DE 102 26 663 A1 beschrieben ist.

Die in den Fig. 1 und 2 dargestellten Scaneinheiten können Spiegel umfassen, die das Licht von Beleuchtungseinheiten in die Scanbereiche und zurück lenken.

Eine Ausgestaltung der Fig. 1 und 2 funktioniert wie folgt.

Bevor der Körper 10 von dem Förderband 12 zu den Scanbereichen 28, 32 gelangt, wird von der stromaufwärts angeordneten Ermittlungseinrichtung die Lage, Ausrichtung und/oder Geometrie des Körpers auf dem Förderband 12 festgestellt. Aus dem Signal der Ermittlungseinheit kann die ebenfalls nicht dargestellte Steuereinrichtung bestimmen, wann und an welchem Punkt der Körper 10 in den Überlappungsbereich der Scanbereiche 28, 32 gerät. In diesem Moment droht eine Doppeltbelichtung an diesem Oberflächenbereich, da Licht von beiden Scaneinheiten 26, 30 gleichzeitig auf einen Oberflächenbereich fällt. Da aus der Ermittlung der Ermittlungseinrichtung bekannt ist, wann dies der Fall ist, kann die Steuereinrichtung im entsprechenden Moment die Scaneinheiten 26 und/oder 30 beeinflussen. So kann sie z.B. die Beleuchtungseinheit einer Scaneinheit vollständig abschalten, so dass der Überlappungsbereich zu einem Zeitpunkt nur von einer Beleuchtungseinheit einer Scaneinheit beleuchtet wird.

Alternativ können die Beleuchtungsstärken der Scaneinheiten 26, 30 gleichermaßen verringert werden, z.B. halbiert werden, so dass eine Überbelichtung ausgeschlossen wird. Selbstverständlich können abhängig von der Applikation die Intensitäten der einzelnen Scaneinheiten auch unterschiedlich verringert werden um eine Überbelichtung im Überlappungsbereich zu vermeiden.

Ebenso können die Empfindlichkeiten der Lichtempfangseinheiten der Scaneinheiten 26, 30 entsprechend verringert werden, so dass die Doppeltbelichtung in dem Überlappungsbereich ohne negativen Einfluss auf die Bildqualität bleibt.

Durch die bei der erfindungsgemäßen Lösung unkritische Überlappung der Scanbereiche 28, 32 können anders als bei dem zum Beispiel in Fig. 11 und 12 dargestellten Stand der Technik die schräg zueinander angeordneten Scaneinheiten näher zusammenrücken, so dass nur ein sehr viel kleineres Lesefeld 34 nötig ist, als das bei den bekannten Lösungen notwendige Lesefeld 134.

Wie es oben am Beispiel der zwei exemplarisch herausgegriffenen Scaneinheiten 26, 30 mit überlappenden Scanbereichen 28, 32 erläutert ist, wirken auch weitere in den Fig. 1 und 2 nicht dargestellte Scaneinheiten mit überlappenden Scanbereichen um eine Überbelichtung zu vermeiden.

Je nach Notwendigkeit können auch mehr als zwei Scaneinheiten mit überlappenden Scanbereichen vorgesehen und entsprechend behandelt werden.

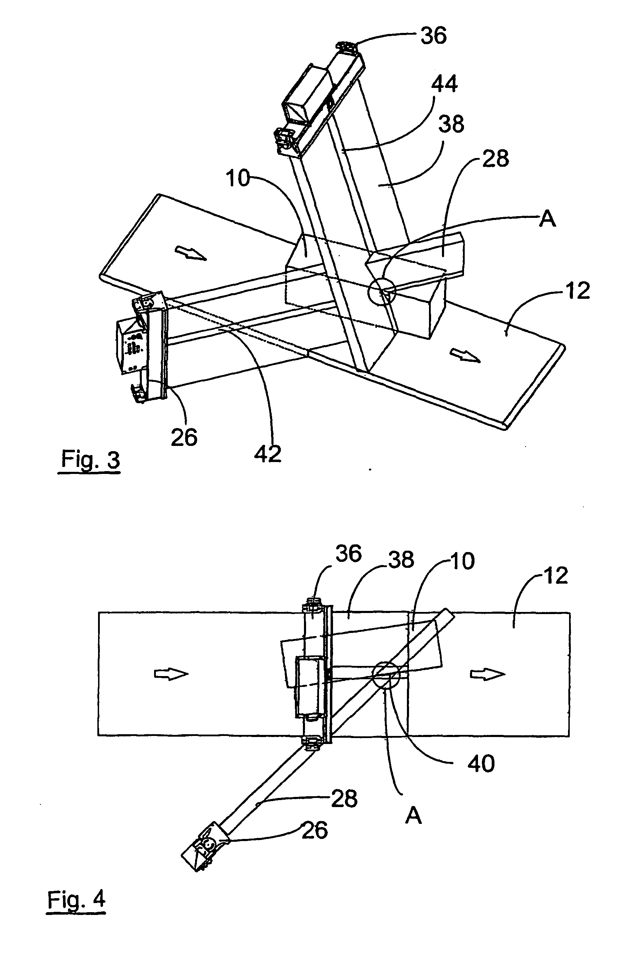

In den Fig. 3 und 4 ist eine Weiterbildung der Ausgestaltung der Fig. 1 und 2 gezeigt.

Abhängig von der Geometrie des zu scannenden Körpers und der Anordnung der Scaneinheiten ist es möglich, dass nur Abschnitte bzw. einzelne Teile des Körpers innerhalb einer Bildsituation überbelichtet sind. Dann ist es nicht notwendig, dass die komplette Beleuchtungseinheit oder Empfangseinheit einer Scaneinheit abgeschaltet oder in der Empfindlichkeit verringert wird, sondern nur der die Überbelichtung verursachende Teil der Beleuchtungseinheit, z.B. ein erstes Drittel einer Leuchtdiodenzeile, und/oder der von der Überbelichtung betroffene Teil der Lichtempfangseinheit (z.B. das erste Drittel einer CCD-Sensorzeile).

In den Fig. 3 und 4 ist eine entsprechende kritische Zone mit A bezeichnet. Insbesondere im Bereich mit der Bezugsziffer 40 kommt es bei der gezeigten Geometrie in diesem Moment zu einer Beleuchtung sowohl durch die Scaneinheit 26 mit deren Scanbereich 28 als auch durch die Scaneinheit 36 mit dem Scanbereich 38.

Mit Hilfe der nicht dargestellten Ermittlungseinrichtung stromaufwärts der Scaneinheiten wurde die Lage, die Ausrichtung und die Geometrie des Körpers 10 auf dem Förderband 12 bestimmt. Eine nicht gezeigte Steuereinheit, die mit den Scaneinheiten 26, 36 zusammenwirkt, steuert bei dem gezeigten Beispiel die Scaneinheit 26 derart, dass ein Bereich 42 aus dem Scanbereich 28 ausgeblendet wird, z.B. indem die entsprechenden Leuchtdioden der Leuchtdiodenzeile in der Scaneinheit 26 abgeschaltet werden. Dasselbe gilt für den ausgesparten Bereich 44 in dem Scanbereich 38 der Scaneinheit 36. Der bei unbeeinflusster Verwendung der Scaneinheiten 26, 36 doppeltbelichtete Teil 40 wird dementsprechend überhaupt nicht beleuchtet, so dass es hier nicht zu einer Überbelichtung oder Blendung kommen kann. Alternativ können die für die ausgesparten Bereiche 42, 44 zuständigen Leuchtdioden der Leuchtdiodenzeilen der Scaneinheiten 26, 36 in ihrer Intensität entsprechend verringert werden.

Schließlich ist es auch bei dieser Ausgestaltung möglich, dass die für die Registrierung von Licht aus dem kritischen Bereich 40 zuständigen CCD-Sensoren in den Scaneinheiten 26, 36 in ihrer Empfindlichkeit entsprechend verringert werden, so dass eine Doppeltbelichtung des Teils 40 ohne negativen Einfluss bleibt.

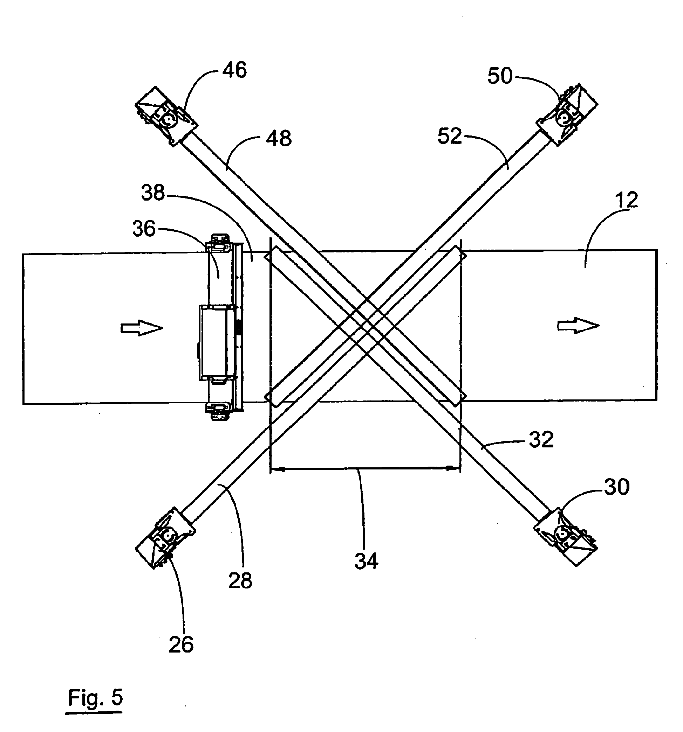

Fig. 5 zeigt eine Draufsicht, bei der zumindest die für die Seitenflächen eines zu scannenden Körpers zuständigen Scaneinheiten 26, 30, 46, 50 und die dazugehörigen Scanbereiche 28, 32, 48, 52 dargestellt sind. Durch die mit der stromaufwärts angeordneten und in Fig. 5 nicht dargestellten Ermittlungseinrichtung festgestellte Lage, Ausrichtung und/oder Geometrie eines zu scannenden Körpers wird wie beschrieben festgelegt, wann eine Steuerung einzelne Teile der Scaneinheiten 26, 30, 46, 50 in ihrer Scanempfindlichkeit verringert, z.B. indem einzelnen Teile der LED-Zeilen der Beleuchtungseinheiten abgeschaltet werden oder einzelne Teile der CCD-Zeilen der Empfangseinheiten in ihrer Empfindlichkeit verringert werden. Es ist deutlich erkennbar, dass der Lesebereich 34, der notwendig ist, um alle Seitenflächen eines zu scannenden Körpers zu erfassen, sehr viel kürzer ist als der Lesebereich 134, der bei Standardkonfigurationen notwendig ist, siehe Fig. 12.

Außerdem ist in Fig.5 die Scaneinheit 36 gezeigt, die zum Abscannen der nach oben weisenden Oberfläche des Körpers 10 dienen kann. Der Übersichtlichkeit halber ist hier allerdings der Scanbereich der Scaneinheit 36 nicht dargestellt. Eine Scaneinheit, die zum Scannen der Unterseite des Körpers dient und deren Scanbereich gegebenenfalls durch eine Unterbrechung des Förderbandes führt (wie z.B. die Unterbrechung 130 in dem Förderband 12, das in Fig. 1 gezeigt ist), ist in Fig. 5 ebenfalls nicht dargestellt. Gegebenenfalls überlappende Scanbereiche solcher Scaneinheiten werden ebenso behandelt, wie die überlappenden Bereiche der in Fig. 5 dargestellten Scanbereiche 28, 32, 48, 52.

Zusätzlich kann bei den zum Beispiel mit Bezug zu den Fig. 1 bis 5 beschriebenen Ausgestaltungen ein Sensor vorgesehen sein, der die Fördergeschwindigkeit des Förderbandes 12 detektiert, wenn diese zum Beispiel nicht ohnehin bekannt ist. Aus dem Zeitpunkt, an dem der Körper zum Beispiel die Ermittlungseinrichtung passiert, kann die Steuerung zusätzlich bestimmen, wann der Körper mit einer seiner Oberflächen in den Überlappungsbereich zweier Scaneinheiten eintritt. Mit diesem Wissen kann die Steuereinheit die Scanempfindlichkeiten derart steuern, dass nur dann, wenn auch ein Körper mit einer seiner Oberflächen in dem Überlappungsbereich ist, eine entsprechende Herabregelung der Scanempfindlichkeiten vorgenommen wird.

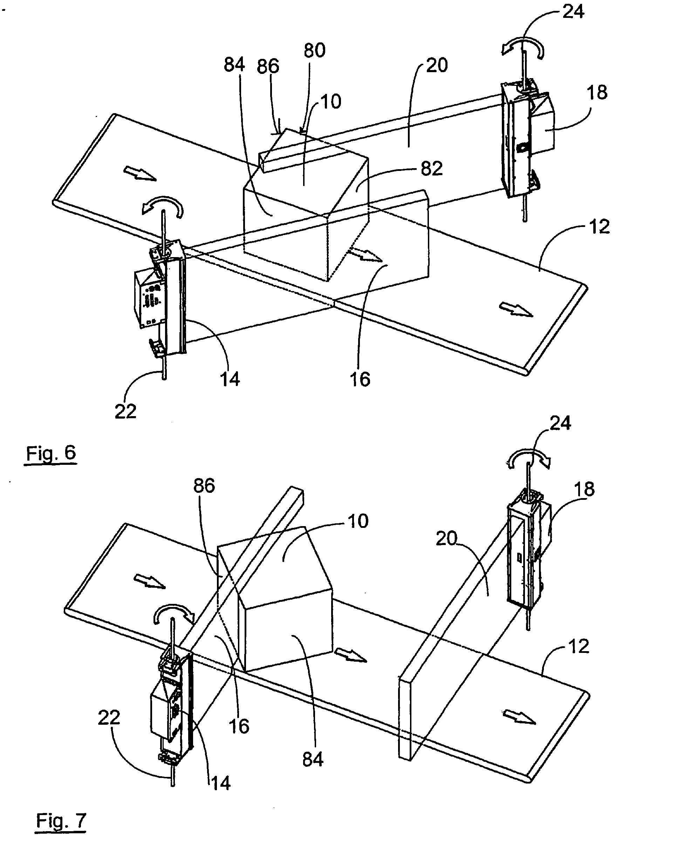

Die Fig. 6 und 7 zeigen eine dritte Ausgestaltung eines erfindungsgemäßen Verfahrens, bei dem Scaneinheiten 14, 18 eingesetzt werden, die schwenkbar sind. Die Scaneinheit 14 ist um die Achse 22 schwenkbar, während die Scaneinheit 18 um die Achse 24 schwenkbar ist. Die Scaneinheiten 14, 18 selbst sind aufgebaut wie die Scaneinheiten 26, 30 der Fig. 1 und 2.

Fig. 6 zeigt eine Anordnung, die vorteilhafterweise gewählt wird, wenn der Körper 10 mit seinen Hauptflächen parallel bzw. senkrecht zur Förderrichtung des Transportbandes 12 ausgerichtet ist.

Fig. 7 zeigt die Anordnung, wie sie vorteilhafterweise gewählt wird, wenn die Flächen des Körpers 10 schräg zur Förderrichtung des Förderbandes 12 ausgerichtet sind.

Die Scaneinheiten 14 und 18 sind an eine nicht gezeigte Steuerung angeschlossen, die für die Ausrichtung der Scanbereiche 16, 20 sorgt, indem die Scaneinheiten 14, 18 um ihre Achsen 22, 24 geschwenkt werden.

Es ist auch möglich, dass ein oder mehrere Spiegel vorgesehen sind, die das Licht von Lichtquellen in die entsprechenden Scanbereiche lenken. Bei einer solchen Ausführungsform mit entsprechenden Spiegeln reicht es aus, wenn die Spiegel schwenkbar angeordnet sind, um das Licht in die Scanbereiche bzw. aus den Scanbereichen heraus zu Lichtempfangseinheiten zu lenken.

Stromaufwärts der Scaneinheiten ist eine nicht gesondert dargestellte Ermittlungseinrichtung vorgesehen, die auf an sich bekannte Weise die Lage oder Ausrichtung des Körpers feststellt.

Diese Ausgestaltung der Fig. 6 und 7 wird wie folgt eingesetzt. Der Körper 10 bewegt sich auf dem Förderband 12 in Richtung der Scaneinheiten 14, 18. Von der in den Figuren nicht gezeigten Ermittlungseinrichtung wird die Lage und Ausrichtung des Körpers festgestellt. Die Steuereinheit bestimmt aus dem Signal der Ermittlungseinrichtung eine optimale Ausrichtung der Scaneinheiten 14, 18 derart, dass von einem Scanbereich 16, 20 jeweils ein möglichst großer Teil der Oberfläche des Körpers 10 abgedeckt wird. So hat die Steuereinheit bei der Verfahrensführung der Fig. 6 die Scaneinheit 18 so eingestellt, dass der Scanbereich 20 sowohl die Oberfläche 82 als auch die Oberfläche 80 abdeckt. Der Scanbereich 16 der Scaneinheit 14 deckt die Oberfläche 84 und die nicht sichtbare Fläche 86 ab.

Mit nur zwei Scaneinheiten können alle vier Seitenflächen des Körpers 10 abgedeckt werden.

Bei der Verfahrensführung der Fig. 7 hat die Ermittlungseinrichtung stromaufwärts des Förderbandes 12 festgestellt, dass der Körper 10 anders ausgerichtet ist. Die Steuereinheit hat bestimmt, dass eine optimale Position der Scaneinheiten 14, 18 nicht schräg, wie in Fig. 6, sondern quer zur Förderrichtung ist. Wie in Fig. 7 erkennbar ist, ist es auf diese Weise möglich, dass die Scaneinheit 14 die Oberflächen 84, 86 des Körpers 10 abdeckt, während die Scaneinheit 18 die zwei in Fig. 7 nicht sichtbaren Seitenflächen abdeckt.

Alle Seitenflächen des Körpers 10 lassen sich dementsprechend mit nur zwei Scaneinheiten abdecken, da die Steuereinrichtung aus dem Signal der nicht dargestellten Ermittlungseinrichtung eine optimale Position der Scaneinheiten 14, 18 festlegt. Gegenüber einer Lösung des Standes der Technik sind zur Abdeckung der Seitenflächen also nicht vier (siehe Fig. 11 und 12) sondern nur zwei Scaneinheiten 14, 18 notwendig.

Selbstverständlich können die Ausführungsformen, die den Einfluss der Überlappung von Scanbereichen berücksichtigen (wie z.B. bei den Ausführungsformen der Fig. 1 bis 5) z.B. vorteilhaft mit den Ausführungsformen der Fig. 6 oder 7 kombiniert werden, die eine Verringerung der Anzahl der Scaneinheiten durch optimale Anordnung der Scanrichtungen bzw. der Position der Scaneinheiten beschreiben.

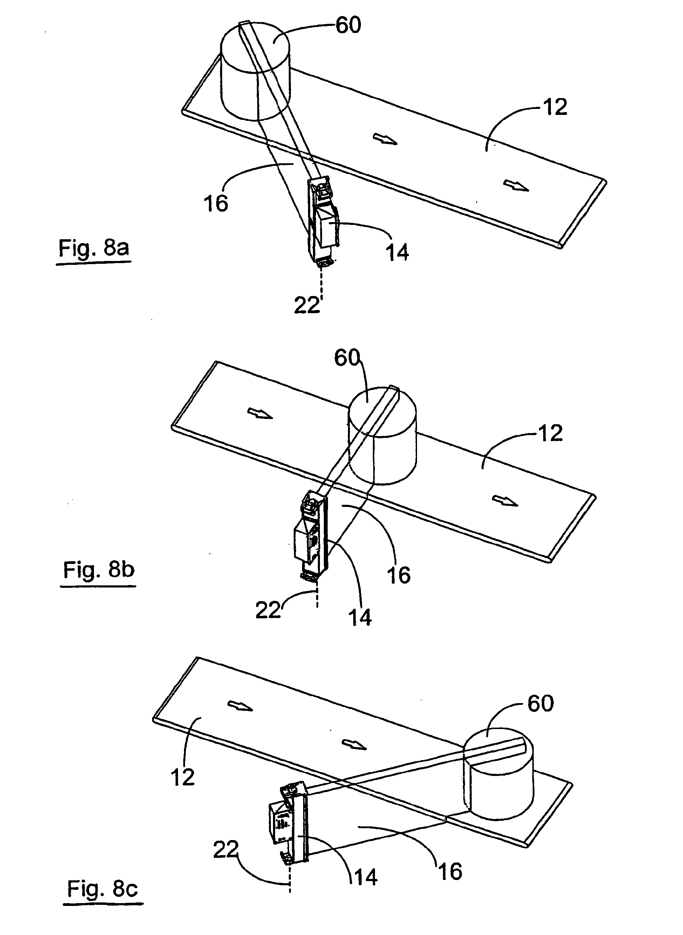

Fig. 8 zeigt eine Ausgestaltung eines erfindungsgemäßen Verfahrens mit einer um die Achse 22 schwenkbaren Scaneinheit 14. Ein Körper 60 wird von dem Förderband 12 fortbewegt. Auf seiner Oberfläche befindet sich z.B. ein auszulesender Barcode. Der Aufbau der Scaneinheit 14 entspricht der Scaneinheit 26, wie sie z.B. mit Bezug zu den Fig. 1 und 2 erläutert worden ist.

Sobald der Körper 60 in den Scanbereich 60 der Scaneinheit 14 eintritt, registriert die Lichtempfangseinheit der Scaneinheit 14 reflektiertes Licht. Eine Steuereinheit passt die Bewegung der Scaneinheit 14 um die Schwenkachse 22 an die Bewegung des Körpers 60 auf dem Förderband 12 an. Die Scaneinheit wird dabei während des Abscanvorgangs abhängig von der Objektlage positioniert. Dies kann z.B. bei Kenntnis der Lage und/oder Ausrichtung und/oder Geometrie des Körpers auf dem Förderband 12 und der Geschwindigkeit des Förderbandes 12 durch eine in Fig. 8 nicht gezeigte Steuereinheit bewerkstelligt werden. Alternativ kann die Steuereinheit das an der Lichtempfangseinheit der Scaneinheit 14 empfangene Licht auswerten, um festzustellen, ob der Körper sich aus dem Scanbereich 16 herausbewegt hat, um so die Nachverfolgungsbewegung der Scaneinheit 14 zu steuern.

In jedem Fall folgt der Scanbereich 16 der Bewegung des Körpers 60 auf dem Förderband 12. Wie es in den Teilfiguren a bis c der Fig. 8 erkennbar ist, bietet der Körper 60 im zeitlichen Verlauf dem Scanbereich 16 unterschiedliche Bereiche seiner Oberfläche zum Abscannen. Nur eine Scaneinheit 14 ist bei dieser Ausgestaltung notwendig, um eine komplette Hälfte des zu scannenden Körpers 60 zu erfassen. Zum Abscannen einer nicht sichtbaren Rückseite des Körpers 60 kann eine Scaneinheit auf der anderen Seite des Förderbandes 12 vorgesehen sein.

In Fig. 8 ist die zylindrische Form des Körpers 60 nur gewählt worden, um das Abscannen der Seite besser darstellen zu können. In der Realität werden meist quaderförmige Körper abgescannt, wobei die Funktionsweise der Ausführungsform der Fig. 8 sich dadurch nicht ändert.

Wenn nicht im Vorhinein klar ist, ob sich der auszulesende Barcode an der Seitenfläche oder auf einer der Deckflächen befindet, werden auch hier zusätzliche Scaneinheiten vorgesehen.

Alternativ zu der in Fig. 8 gezeigten Ausführungsform kann das Licht einer Beleuchtungseinheit auch mit Hilfe eines Umlenkers, zum Beispiel eines Spiegels, in den Scanbereich 16 bzw. aus dem Scanbereich 16 zu einer Lichtempfangseinheit gelenkt werden. Dann ist es ausreichend, wenn der Umlenker selbst schwenkbar ausgestaltet ist.

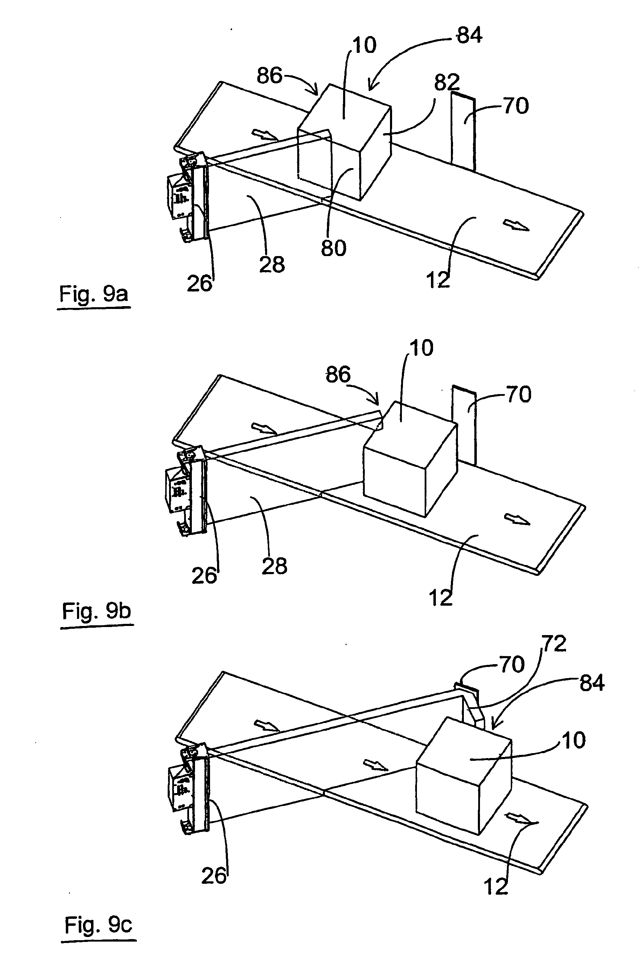

Fig. 9 zeigt eine Ausgestaltung unter Verwendung eines Spiegels 70, um eine Scaneinheit einzusparen.

Die Anordnung umfasst eine Scaneinheit 26 mit einem Scanbereich 28, wie sie z.B. mit Bezug zu den Fig. 1 und 2 erläutert ist. Auf einem Förderband 12 wird ein Körper 10 mit den Seitenflächen 80, 82, 84 und 86 durch den Scanbereich 28 geführt. In Teilfigur 9a wird gerade die Seitenfläche 80 gescannt, während in Teilfigur 9b die Fläche 86 gescannt wird. Nachdem der Körper 10 den Scanbereich 28 verlassen hat, trifft das Licht der Scaneinheit 26 auf den Spiegel 70, den es zuvor nicht erreichen konnte. Von dem Spiegel 70 wird das Licht auf die Fläche 84 des Körpers 10 gelenkt. Es wird dort reflektiert und von dem Spiegel 70 zurück zu der Scaneinheit 26 geschickt, von deren Lichtempfangseinheit es detektiert werden kann. Die Anordnung ermöglicht also das Abscannen dreier Seitenflächen des Körpers 10 mit nur einer Scaneinheit 26 durch die geschickte Anordnung des Spiegels 70.

Bei entsprechender Anordnung des Umlenkers bzw. wenn z.B. mehrere Umlenker vorgesehen sind, können mit einer Scaneinheit auch noch mehr Seiten eines Körpers abgescannt werden.

Zusätzlich kann eine Ermittlungsvorrichtung stromaufwärts der Scaneinheit 26 vorgesehen sein, die die Lage, die Ausrichtung und/oder die Geometrie des Körpers 10 auf dem Förderband 12 feststellt. Ist die Scaneinheit 26 und der Spiegel 70 beweglich gewählt, z.B. indem die Scaneinheit 26 schwenkbar ist und der Spiegel 70 entsprechend entlang des Förderbandes 12 linear bewegt werden kann, kann die optimale Scanrichtung der Scaneinheit 26 im Vorhinein festgelegt werden und mit Hilfe einer Steuereinheit die Scaneinheit 26 und der Spiegel 70 entsprechend positioniert werden.

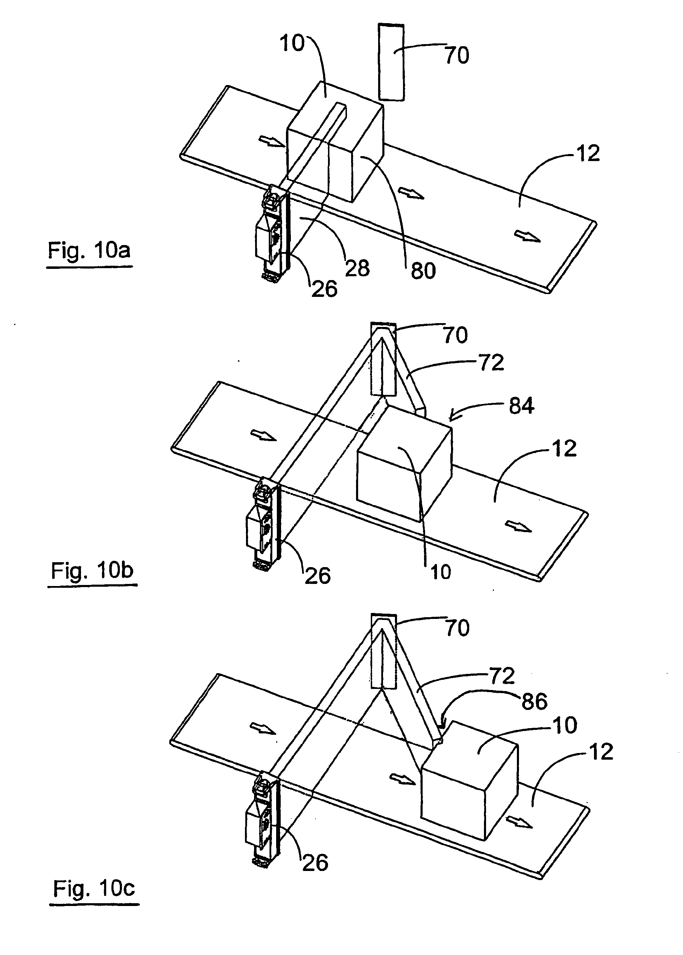

Fig. 10 zeigt eine andere Anordnung zur Durchführung einer entsprechenden Ausgestaltung des Verfahrens, bei der die Scaneinheit 26 nicht schräg zur Förderrichtung des Förderbandes 12, sondern quer dazu ausgerichtet ist. Solange der Körper 10 direkt im Scanbereich 28 der Scaneinheit 26 ist (Teilfigur 10a) wird die Fläche 80 abgescannt. Nachdem der Körper 10 den Scanbereich 28 verlassen hat, erreicht das Licht den Spiegel 70 und es wird zunächst die Fläche 84 abgescannt, wobei das reflektierte Licht durch den Scanbereich 72 wieder zurück zum Spiegel 70 und zur Scaneinheit 26 gelenkt wird (Teilfigur 10b). Im Zustand der Teilfigur 10c wird die Fläche 86 gescannt, die sich jetzt im Scanbereich 72 befindet.

Ebenso wie bei Fig. 9 ist nur eine Scaneinheit 26 notwendig, um drei oder mehr Seitenflächen abzuscannen. Auch bei der Ausführungsform der Fig. 10 kann eine Ermittlungseinrichtung stromaufwärts der Scaneinheit vorgesehen sein, um die Lage, Ausrichtung und/oder Geometrie des Körpers auf dem Förderband 10 im Vorhinein zu bestimmen und zur optimalen Ausrichtung Scanbereichs 28 bzw. des Spiegels 70 verwendet zu werden.

Eine nicht dargestellte Ausgestaltung eines erfindungsgemäßen Verfahrens beruht darauf, dass eine Überbelichtung festgestellt wird und die Beleuchtungseinheit und/oder die Empfangseinheit einer Scaneinheit entsprechend geregelt wird, dass eine Überbelichtung entweder nicht stattfindet (zum Beispiel wie beschrieben durch Herabregeln oder Abschalten wenigstens der betroffenen Teile der Beleuchtungseinheit) oder ohne Einfluss auf die Qualität des Bildes bleibt (zum Beispiel wie beschrieben durch Absenken der Empfindlichkeit wenigstens der betroffenen Teile der Lichtempfangseinheit). So werden die Eigenschaften der Oberflächen des Körpers, z.B. die Remission, Reflexion oder ähnliches inhärent berücksichtigt.

Eine solche Ausgestaltung kann besonders vorteilhaft mit einer Ausgestaltung unter Verwendung von Scaneinheiten mit überlappenden Scanbereichen kombiniert werden, die durch Abschalten oder Verringern der Intensität von Teilen einer Beleuchtungseinheit einerseits bzw. durch Verringern der Empfangsempfindlichkeit von Teilen einer Lichtempfangseinheit einer Scaneinheit andererseits eine Mehrfachbelichtung des Überlappungsbereiches zweier Scaneinheiten verhindert bzw. deren Einfluss auf die Bildqualität verringert.

Die einzelnen geschilderten Ausgestaltungen lassen sich untereinander kombinieren, so dass die geschilderten Vorteile der einzelnen Ausgestaltungen kumulativ verwirklicht werden können.

Die Erfindung ermöglicht eine Verringerung des konstruktiven Aufbaus z.B. durch Verkleinerung des notwendigen Lesefeldes und/oder Verringerung der Anzahl der Scaneinheiten. Außerdem kann die Bildqualität durch Berücksichtigung von Überbelichtung in einzelnen Bereichen verbessert werden.

### Bezugszeichenliste

- 10: Körper
- 12: Fördereinrichtung
- 14: Scaneinheit, schwenkbar
- 16: Scanbereich
- 18: Scaneinheit, schwenkbar
- 20: Scanbereich
- 22, 24: Schwenkachse
- 26, 30: Scaneinheit
- 28, 32: Scanbereich
- 34: Lesefeld
- 36: Scaneinheit
- 38: Scanbereich
- 40: Überbelichtungsbereich
- 42, 44: deaktivierter Bereich
- 46, 50: Scaneinheit
- 48, 52: Scanbereich
- 60: Körper
- 70: Spiegel
- 72: Scanbereich
- 80, 82, 84, 86: Seitenflächen des Körpers
- 88: obere Fläche des Körpers
- 104, 108, 112, 116, 120, 124: Scaneinheit
- 106, 110, 114, 118, 122, 126: Scanbereich
- 130: Schlitz in der Fördereinrichtung
- 134: Lesefeld

- A: kritische Überbelichtungszone

## Patentansprüche

1. Scanverfahren zum optischen Abscannen wenigstens einer Teiloberfläche eines Körpers (10, 60), bei dem der Körper von wenigstens einer Beleuchtungseinheit beleuchtet wird und wenigstens eine Lichtempfangseinheit von der Beleuchtungseinheit auf den Körper gesendetes und von dem Körper reflektiertes Licht empfangen kann, so dass durch die Beleuchtungseinheit und die Lichtempfangseinheit ein Scanbereich (16, 20, 28, 32, 38, 48, 52, 72) einer die Beleuchtungseinheit und die Lichtempfangseinheit umfassenden Scaneinheit (14, 18, 26, 30, 36, 46, 50) definiert wird,
**dadurch gekennzeichnet, dass**
- wenigstens zwei derartige Scaneinheiten (26, 30, 36, 46, 50) mit jeweils einem Scanbereich (28, 32, 38, 48, 52) verwendet werden, wobei die Scanbereiche sich in einem Überlappungsbereich (40) wenigstens teilweise überlappen,
- zumindest dann, wenn der Körper (10) mit seiner Oberfläche in einem Überlappungsbereich ist, in dem sich die Scanbereiche wenigstens zweier Scaneinheiten (26, 30, 36, 46, 50) überlappen, die Scanempfindlichkeit wenigstens einer der Scaneinheiten (26, 30, 36, 46, 50) für den Überlappungsbereich (40) vermindert wird, wobei die Verminderung der Scanempfindlichkeit wenigstens einer der Scaneinheiten durch Herabsetzen der Intensität und/oder Verkürzen der Beleuchtungszeit für wenigstens den Teil der Beleuchtungseinheit, der den Überlappungsbereich beleuchtet, und/oder durch Herabsetzen der Empfangsempfindlichkeit wenigstens des Teiles der Lichtempfangseinheit, auf den reflektiertes Licht aus dem Überlappungsbereich fällt, und/oder durch Deaktivieren wenigstens des Teiles der Beleuchtungseinheit, der den Überlappungsbereich beleuchtet, erreicht wird.

2. Scanverfahren nach Anspruch 1,
**dadurch gekennzeichnet,**
**dass** die Lage und/oder die Ausrichtung und/oder die Geometrie des Körpers (10) in Bezug auf wenigstens eine Scaneinheit bestimmt wird und aus der Lage und/oder der Ausrichtung und/oder der Geometrie bestimmt wird, wann sich der Körper (10) mit seiner Oberfläche in dem Überlappungsbereich wenigstens zweier Scaneinheiten (26, 30, 36, 46, 50) befindet.

3. Scanverfahren nach einem der Ansprüche 1 oder 2,
**dadurch gekennzeichnet,**
**dass** der Körper (10) und wenigstens eine Scaneinheit (26, 30, 36, 46, 50) relativ zueinander bewegt werden, vorzugsweise indem der Körper (10) an der Beleuchtungseinheit und der Lichtempfangseinheit vorbeigeführt wird.

4. Scanverfahren nach den Ansprüchen 2 und 3,
**dadurch gekennzeichnet,**
**dass** die Lage und/oder die Ausrichtung und/oder die Geometrie des Körpers bestimmt wird, bevor sich der Körper (10) in dem Überlappungsbereich wenigstens zweier Scaneinheiten (26, 30, 36, 46, 50) befindet.

5. Scanverfahren nach einem der Ansprüche 1 bis 4,
**dadurch gekennzeichnet, dass**
- während der Körper (10) abgescannt wird, geprüft wird, ob an einer Lichtempfangseinheit einer Scaneinheit (14, 18, 26, 30, 36, 46, 50) ein Bereich mit einer Überbelichtung vorliegt, und
- wenn eine Überbelichtung vorliegt, entweder die Intensität wenigstens eines Teils einer Beleuchtungseinheit wenigstens einer Scaneinheit (14, 18, 26, 30, 36, 46, 50), die den überbelichteten Bereich beleuchtet, oder die Empfangsempfindlichkeit wenigstens eines Teils einer Lichtempfangseinheit wenigstens einer Scaneinheit, die Licht aus diesem Bereich empfängt, vermindert wird.

6. Scanverfahren nach Anspruch 5,
**dadurch gekennzeichnet,**
**dass** zumindest dann, wenn eine Überbelichtung an einer Lichtempfangseinheit, die Licht aus dem Überlappungsbereich empfängt, festgestellt wird die Scanempfindlichkeit wenigstens einer der Scaneinheiten zumindest für den Überlappungsbereich vermindert wird.

7. Scanverfahren nach einem der Ansprüche 1 bis 6,
**dadurch gekennzeichnet,**
**dass** die Scanempfindlichkeit aller Scaneinheiten mit wenigstens teilweise überlappendem Scanbereich zumindest für einen Teil des Überlappungsbereichs gleich stark vermindert wird.

8. Scanverfahren nach einem der Ansprüche 1 bis 7,
**dadurch gekennzeichnet,**
**dass** wenigstens eine Scaneinheit (14, 18, 26) verwendet wird, die derart ausgestaltet und/oder angeordnet ist, dass ein möglichst großer Teil der Oberfläche des Körpers (10, 60) von einer Scaneinheit abscannt werden kann.

9. Scanverfahren nach Anspruch 8,
**dadurch gekennzeichnet,**
**dass** wenigstens eine Scaneinheit (14, 18) mit beweglichem, vorzugsweise schwenkbarem, Scanbereich (16, 20) eingesetzt wird.

10. Scanverfahren nach einem der Ansprüche 8 oder 9,
**dadurch gekennzeichnet,**
**dass** aus der Lage und/oder der Ausrichtung und/oder der Geometrie des Körpers (10) eine Scanrichtung und/oder Position wenigstens einer Scaneinheit (14, 18) derart festgelegt wird, dass von ihr ein möglichst großer Teil der Oberfläche des Körpers (10) abgescannt werden kann, vorzugsweise wenigstens zwei Seiten.

11. Scanverfahren nach einem der Ansprüche 1 bis 10,
**dadurch gekennzeichnet,**
**dass** der Körper (10, 60) relativ zu dem wenigstens einen Scanbereich bewegt wird, vorzugsweise indem der Körper an der Beleuchtungseinheit und der Lichtempfangseinheit vorbeigeführt wird.

12. Scanverfahren nach den Ansprüchen 9, 10 und 11,
**dadurch gekennzeichnet,**
**dass** der Scanbereich (16, 20) der Scaneinheit (14, 18) derart eingestellt wird, dass die Scaneinheit die festgelegte Scanrichtung und/oder Position inne hat, bevor der Körper (10) in den Scanbereich (16, 20) eintritt.

13. Scanverfahren nach den Ansprüchen 9 und 11,
**dadurch gekennzeichnet,**
**dass** der Scanbereich wenigstens einer Scaneinheit (14) mit beweglichem Scanbereich (16) während der relativen Bewegung des Körpers (60) und der Scaneinheit (14) derart bewegt, vorzugsweise geschwenkt, wird, dass der Scanbereich (16) dem Körper (60) folgt.

14. Scanverfahren nach einem der Ansprüche 1 bis 13,
**dadurch gekennzeichnet, dass**
wenigstens eine Scaneinheit verwendet wird, die wenigstens einen Umlenker (70), vorzugsweise einen Spiegel, umfasst.

15. Scanverfahren nach Anspruch 14
**dadurch gekennzeichnet,**
**dass** der Körper (10) zunächst in einen ersten Scanbereich (28) einer ersten Scaneinheit (26) gebracht wird und nach Verlassen des ersten Scanbereichs (28) in einen zweiten Scanbereich (72) einer zweiten Scaneinheit gebracht wird, der ein Abscannen eines Oberflächenbereiches (82, 84) des Körpers ermöglicht, der nicht vollständig von dem ersten Scanbereich (28) erfasst wurde, wobei die zweite Scaneinheit die Beleuchtungseinheit und die Lichtempfangseinheit der ersten Scaneinheit (26) und wenigstens einen Umlenker, vorzugsweise einen Spiegel (70) umfasst, der von der Beleuchtungseinheit nur beleuchtet wird, wenn der Körper (10) nicht im ersten Scanbereich ist.

16. Scanverfahren nach Anspruch 14 oder 15
**dadurch gekennzeichnet,**
**dass** der wenigstens eine Umlenker verwendet wird, um den Scanbereich der wenigstens einen Scaneinheit derart auszurichten, dass er von einem abzuscannenden und vorbeigeführten Körper durchquert wird.

17. Scanverfahren nach einem der Ansprüche 1 bis 16,
**dadurch gekennzeichnet,**
**dass** mehrere Scaneinheiten verwendet werden, von denen sich zumindest zwei eine Beleuchtungseinheit teilen, deren Licht durch ein oder mehrere Strahlteiler auf die Scaneinheiten aufgeteilt wird.

18. Scanverfahren nach einem der Ansprüche 1 bis 17,
**dadurch gekennzeichnet,**
**dass** die Lichtempfangseinheit und die Beleuchtungseinheit einer Scaneinheit (14, 18, 26, 30, 36, 46, 50) derart benachbart zueinander angeordnet sind, dass das Licht, das von dem Körper (10, 60) zu der Lichtempfangseinheit reflektiert wird, im Wesentlichen den entgegengesetzten Weg nimmt, wie Licht, das von der Beleuchtungseinheit durch den Scanbereich (16, 20, 28, 32, 38, 48, 52, 72) zu dem Körper (10, 60) gesendet wird.

19. Scanvorrichtung zum optischen Abscannen wenigstens einer Teiloberfläche eines Körpers (10, 60) mit
- wenigstens einer Beleuchtungseinheit zur Beleuchtung wenigstens eines Teiles eines Lesefeldes (34),
- wenigstens einer Lichtempfangseinheit zum Empfang von aus dem Lesefeld (34) ggf. reflektierten Lichtes und zur Erzeugung eines Empfangssignals,
wobei durch den Lichtweg von der Beleuchtungseinheit zur Lichtempfangseinheit ein Scanbereich (16, 20, 28, 32, 38, 48, 52, 72) einer Scaneinheit (14, 18, 26, 30, 36, 46, 50) definiert wird, und
- einer Auswerteeinheit zum Auswerten des Empfangssignals, **gekennzeichnet durch**
- wenigstens zwei derartige Scaneinheiten (26, 30, 36, 46, 50) mit wenigstens teilweise überlappenden Scanbereichen (28, 32, 38, 48, 52) und
- einer Steuereinheit zur Steuerung der Scanempfindlichkeit derart, dass zumindest dann, wenn sich ein Körper (10) mit seiner Oberfläche in dem Überlappungsbereich befindet, in dem sich die Scanbereiche (28, 32, 38, 48, 52) wenigstens zweier Scaneinheiten (26, 30, 36, 46, 50) überlappen, die Scanempfindlichkeit wenigstens einer der Scaneinheiten (26, 30, 36, 46, 50) für den Überlappungsbereich (40) verminderbar ist, wobei die Verminderung der Scanempfindlichkeit wenigstens einer der Scaneinheiten **durch** Herabsetzen der Intensität und/oder Verkürzen der Beleuchtungszeit für wenigstens den Teil der Beleuchtungseinheit, der den Überlappungsbereich beleuchtet, und/oder **durch** Herabsetzen der Empfangsempfindlichkeit wenigstens des Teiles der Lichtempfangseinheit, auf den reflektiertes Licht aus dem Überlappungsbereich fällt, und/oder **durch** Deaktivieren wenigstens des Teiles der Beleuchtungseinheit, der den Überlappungsbereich beleuchtet, erreicht wird.

20. Scanvorrichtung nach Anspruch 19,
**gekennzeichnet durch**
eine Ermittlungseinrichtung zur Ermittlung der Lage und/oder der Ausrichtung und/oder der Geometrie eines zu scannenden Körpers (10) in Bezug auf die wenigstens eine Beleuchtungseinheit und/oder die wenigstens eine Lichtempfangseinheit.

21. Scanvorrichtung nach einem der Ansprüche 19 oder 20, **gekennzeichnet durch**
eine Transporteinrichtung (12) zum Transport des Körpers (10, 60) durch das Lesefeld (34).

22. Scanvorrichtung nach Anspruch 21,
**dadurch gekennzeichnet,**
**dass** die Ermittlungseinrichtung stromaufwärts des Lesefeldes (34) angeordnet ist.

23. Scanvorrichtung nach einem der Ansprüche 19 bis 22,
**gekennzeichnet durch**
eine Einrichtung zur Bestimmung der Beleuchtungsstärke an wenigstens einem Teil wenigstens einer Lichtempfangseinheit.

24. Scanvorrichtung nach einem der Ansprüche 19 bis 23,
**dadurch gekennzeichnet,**
**dass** wenigstens eine Scaneinheit (14, 18, 26) derart angeordnet und/oder ausgestaltet ist, dass mit ihr ein möglichst großer Teil der Oberfläche des Körpers (10, 60) abgescannt werden kann.

25. Scanvorrichtung nach Anspruch 24,
**gekennzeichnet durch**
wenigstens eine Scaneinheit (14, 18) mit beweglichem vorzugsweise schwenkbarem Scanbereich (16, 20).

26. Scanvorrichtung nach Anspruch 25,
**gekennzeichnet durch**
eine Steuereinrichtung, die den Scanbereich wenigstens einer Scaneinheit (14) mit beweglichen Scanbereich (16) während der relativen Bewegung des Körpers (60) und der Scaneinheit (40) derart bewegt, vorzugsweise schwenkt, dass der Scanbereich (16) dem Körper (60) folgt.

27. Scanvorrichtung nach einem der Ansprüche 24 bis 26,
**dadurch gekennzeichnet,**
**dass** sich wenigstens eine erste und eine zweite Scaneinheit eine Beleuchtungseinheit und eine Lichtempfangseinheit teilen, wobei der Scanbereich (72) der zweiten Scaneinheit zusätzlich einen Umlenker, vorzugsweise einen Spiegel (70), umfasst, der derart angeordnet ist, dass er von der Beleuchtungseinheit nur beleuchtet wird, wenn kein Körper (10) in dem Scanbereich (28) der ersten Scaneinheit (26) ist.

28. Scanvorrichtung nach einem der Ansprüche 19 bis 27,
**dadurch gekennzeichnet,**
**dass** wenigstens eine Scaneinheit wenigstens einen Umlenker (70), vorzugsweise einen Spiegel, umfasst.

29. Scanvorrichtung nach einem der Ansprüche 19 bis 28,
**gekennzeichnet durch**
wenigstens einen Strahlteiler zur Aufteilung des Lichtes einer Beleuchtungseinheit auf mehrere Scaneinheiten.

30. Scanvorrichtung nach einem der Ansprüche 19 bis 29,
**dadurch gekennzeichnet,**
**dass** die Lichtempfangseinheit und die Beleuchtungseinheit einer Scaneinheit (14, 18, 26, 30, 36, 46, 50) derart benachbart zueinander angeordnet sind, dass das Licht, das von dem Körper (10, 60) zu der Lichtempfangseinheit reflektiert wird, im Wesentlichen den entgegengesetzten Weg nimmt, wie Licht, das von der Beleuchtungseinheit durch den Scanbereich (16, 20, 28, 32, 38, 48, 52, 72) zu dem Körper (10, 60) gesendet wird.

31. Scanvorrichtung nach einem der Ansprüche 19 bis 30,
**dadurch gekennzeichnet,**
**dass** die Beleuchtungseinheit der mindestens einen Scaneinheit (14, 18, 26, 30, 36, 46, 50) eine Anzahl vorzugsweise in einer Reihe angeordneter Leuchtdioden umfasst.

32. Scanvorrichtung nach einem der Ansprüche 19 bis 31,
**dadurch gekennzeichnet,**
**dass** die Lichtempfangseinheit der wenigstens einen Scaneinheit (14, 18, 26, 30, 36, 46, 50) eine Anzahl vorzugsweise in einer Reihe angeordneter CMOS-Sensoren oder CCD-Sensoren umfasst.

## Claims

1. A scanning method for the optical scanning of at least a part surface of a body (10, 60), wherein the body is illuminated by at least one lighting unit and at least one light receiver unit can receive light transmitted from the lighting unit onto the body and reflected by the body so that a scanning zone (16, 20, 28, 32, 38, 48, 52, 72) of a scanning unit (14, 18, 26, 30, 36, 46, 50) including the lighting unit and the light receiver unit is defined by the lighting unit and the light receiver unit,
**characterized in that**
- at least two such scanning units (26, 30, 36, 46, 50) each having one scanning zone (28, 32, 38, 48, 52) are used wherein the scanning zones overlap at least partly in an overlap zone (40); and
- at least when the surface of the body (10) is in an overlap zone in which the scanning zones of at least two scanning units (26, 30, 36, 46, 50) overlap, the scanning sensitivity of at least one of the scanning units (26, 30, 36, 46, 50) is reduced at least for the overlap zone (40), wherein the reduction of the scanning sensitivity of at least one of the scanning units is achieved by reducing the intensity and/or shortening of the illumination time for at least that part of the lighting unit which illuminates the overlap zone, and/or by reducing the reception sensitivity of at least that part of a light receiver onto which reflected light from the overlap zone is incident, and/or by deactivating at least that part of the lighting unit which illuminates the overlap zone.

2. A scanning method in accordance with claim 1, **characterized in that** the position and/or the alignment and/or the geometry of the body (10) with respect to at least one scanning unit is determined and a determination is made from the position and/or alignment and/ or geometry when the surface of the body (10) is located in the overlap zone of at least two scanning units (26, 30, 36, 46, 50).

3. A scanning method in accordance with any one of the claims 1 or 2, **characterized in that** the body (10) and at least one scanning unit (26, 30, 36, 46, 50) are moved relative to one another, preferably **in that** the body (10) is led past the lighting unit and the light receiver unit.

4. A scanning method in accordance with claim 2 and claim 3, **characterized in that** the position and/or the alignment and/or the geometry of the body is/ are determined before the body (10) is located in the overlap zone of at least two scanning units (26, 30, 36, 46, 50).

5. A scanning method in accordance with any one of the claims 1 to 4, **characterized in that**
- a check is made while the body (10) is scanned whether a zone with over-exposure is present at a light receiver unit of a scanning unit (14, 18, 26, 30, 36, 46, 50); and
- if over-exposure is present, either the intensity of at least one part of a lighting unit of at least one scanning unit (14, 18, 26, 30, 36, 46, 50) which illuminates the over-exposed zone or the reception sensitivity of at least one part of a light receiver unit of at least one scanning unit which receives light from this zone is reduced.

6. A scanning method in accordance with claim 5, **characterized in that**, at least when over-exposure is found at a light receiver unit which receives light from the overlap zone, the scanning sensitivity of at least one of the scanning units is reduced at least for the overlap zone.

7. A scanning method in accordance with any one of the claims 1 to 6, **characterized in that** the scanning sensitivity of all scanning units with at least a partly overlapping scanning zone is reduced by an equal amount for a part of the overlap zone.

8. A scanning method in accordance with any one of the claims 1 to 7, **characterized in that** at least one scanning unit (14, 18, 26) is used which is configured and/or arranged such that a part of the surface of the body (10, 60) which is as large as possible can be scanned by a scanning unit.

9. A scanning method in accordance with claim 8, **characterized in that** at least one scanning unit (14, 18) having a movable scanning zone (16, 20), preferably a pivotable scanning zone, is used.

10. A scanning method in accordance with claim 8 or claim 9, **characterized in that** a scanning direction and/or position of at least one scanning unit (14, 18) is determined from the position and/or alignment and/or geometry of the body (10) such that a part of the surface of the body (10) which is as large as possible can be scanned by it, preferably at least two sides.

11. A scanning method in accordance with any one of the claims 1 to 10, **characterized in that** the body (10, 60) is moved relative to the at least one scanning zone, preferably **in that** the body is led past the lighting unit and the light receiver unit.

12. A scanning method in accordance with claim 9, claim 10 and claim 11, **characterized in that** the scanning zone (16, 20) of the scanning unit (14, 18) is set such that the scanning unit has the fixed scanning direction and/or position before the body (10) enters into the scanning zone (16, 20).

13. A scanning method in accordance with claim 9 and claim 11, **characterized in that** the scanning zone of at least one scanning unit (14) with a moving scanning zone (16) is moved, preferably pivoted, during the relative movement of the body (60) and of the scanning unit (14) such that the scanning zone (16) follows the body (60).

14. A scanning method in accordance with any one of the claims 1 to 13, **characterized in that** at least one scanning unit is used which includes a redirector (70), preferably a mirror.

15. A scanning method in accordance with claim 14, **characterized in that** the body (10) is first brought into a first scanning zone (28) of a first scanning unit (26) and, after exiting the first scanning zone (28), into a second scanning zone (72) of a second scanning unit said second scanning zone permitting a scanning of a surface zone (82, 84) of the body which was not completely detected by the first scanning zone (28), with the second scanning unit including the lighting unit and the light receiver unit of the first scanning unit (26) and at least one redirector, preferably a mirror 70, which is only illuminated by the lighting unit when the body (10) is not in the first scanning zone.

16. A scanning method in accordance with claim 14 or claim 15, **characterized in that** the at least one redirector is used to align the scanning zone of the at least one scanning unit such that it is passed through by a body to be scanned and led past.

17. A scanning method in accordance with any one of the claims 1 to 16, **characterized in that** a plurality of scanning units are used of which at least two share a lighting unit whose light is spread over the scanning units by one or more beam splitters.

18. A scanning method in accordance with any one of the claims 1 to 17, **characterized in that** the light receiver unit and the lighting unit of a scanning unit (14, 18, 26, 30, 36, 46, 50) are arranged adjacent to one another such that the light reflected by the body (10, 60) to the light receiver unit substantially takes the opposite path to light transmitted by the lighting unit through the scanning zone (16, 20, 28, 32, 38, 48, 52, 72) to the body (10, 60).

19. A scanning apparatus for the optical scanning of at least a part surface of a body (10, 60) comprising
- at least one lighting unit for the illumination of at least a part of a reading field (34);
- at least one light receiver unit for the reception of light possibly reflected from the reading field (34) and for the generation of a received signal,
wherein a scanning zone (16, 20, 28, 32, 38, 48, 52, 72) of a scanning unit (14, 18, 26, 30, 36, 46, 50) is defined by the light path of the lighting unit to the light receiver unit; and
- an evaluation unit for the evaluation of the received signal, **characterized by**
- at least two such scanning units (26, 30, 36, 46, 50) having at least partly overlapping scanning zones (28, 32, 38, 48, 52); and
- a control unit for the control of the scanning sensitivity such that at least when a surface of a body (10) is located in the overlap zone in which the scan zones (28, 32, 38, 48, 52) of at least two scanning units (26, 30, 36, 46, 50) overlap, the scanning sensitivity of at least one of the scanning units (26, 30, 36, 46, 50) is reducible at least for the overlap zone (40), wherein the reduction of the scanning sensitivity of at least one of the scanning units is achieved by reducing the intensity and/or shortening of the illumination time for at least that part of the lighting unit which illuminates the overlap zone, and/or by reducing the reception sensitivity of at least that part of a light receiver onto which reflected light from the overlap zone is incident, and/or by deactivating at least that part of the lighting unit which illuminates the overlap zone.

20. A scanning apparatus in accordance with claim 19, **characterized by** a determination device for the determination of the position and/or the alignment and/or the geometry of a body (10) to be scanned with respect to the at least one lighting unit and/or the at least one light receiver unit.

21. A scanning apparatus in accordance with any one of the claims 19 or 20, **characterized by** a transport device (12) for the transport of the body (10, 60) through the reading field (34).

22. A scanning apparatus in accordance with claim 21, **characterized in that** the determination device is arranged upstream of the reading field (34).

23. A scanning apparatus in accordance with any one of the claims 19 to 22, **characterized by** a device for the determination of the intensity of illumination at at least one part of at least one light receiver unit.

24. A scanning apparatus in accordance with any one of the claims 19 to 23, **characterized in that** at least one scanning unit (14, 18, 26) is arranged and/or configured such that a part of the surface of the body (10, 60) which is as large as possible can be scanned with it.

25. A scanning apparatus in accordance with claim 24, **characterized by** at least one scanning unit (14, 18) having a movable scanning region (16, 20), preferably a pivotable scanning region.

26. A scanning apparatus in accordance with claim 25, **characterized by** a control device which moves, preferably pivots, the scanning zone of at least one scanning unit (14) having a movable scanning zone (16) during the relative movement of the body (60) and of the scanning unit (40) such that the scanning zone (16) follows the body (60).

27. A scanning apparatus in accordance with any one of the claims 24 to 26, **characterized in that** at least one first and one second scanning unit share a lighting unit and a light receiver unit, with the scanning zone (72) of the second scanning unit additionally including a redirector, preferably a mirror (70), which is arranged such that it is illuminated by the lighting unit only when no body (10) is in the scanning zone (28) of the first scanning unit (26).

28. A scanning apparatus in accordance with any one of the claims 19 to 27, **characterized in that** at least one scanning unit includes at least one redirector (70), preferably a mirror.

29. A scanning apparatus in accordance with any one of the claims 19 to 28, **characterized by** at least one beam splitter for the splitting of the light of a lighting unit over a plurality of scanning units.

30. A scanning apparatus in accordance with any one of the claims 19 to 29, **characterized in that** the light receiver unit and the lighting unit of a scanning unit (14, 18, 26, 30, 36, 46, 50) are arranged adjacent to one another such that the light reflected by the body (10, 60) to the light receiver unit substantially takes the opposite path to light transmitted by the lighting unit through the scanning zone (16, 20, 28, 32, 38, 48, 52, 72) to the body (10, 60).

31. A scanning apparatus in accordance with any one of the claims 19 to 30, **characterized in that** the lighting unit of the at least one scanning unit (14, 18, 26, 30, 36, 46, 50) includes a plurality of light emitting diodes preferably arranged in a row.

32. A scanning apparatus in accordance with any one of the claims 19 to 31, **characterized in that** the light receiver unit of the at least one scanning unit (14, 18, 26, 30, 46, 50) includes a plurality of CMOS sensors or CCD sensors preferably arranged in a row.

## Revendications

1. Procédé de balayage pour le balayage optique d'au moins une surface partielle d'un corps (10, 60), dans lequel le corps est éclairé par au moins une unité d'éclairage et au moins une unité de réception de lumière est capable de recevoir la lumière envoyée par l'unité d'éclairage vers le corps et réfléchie depuis le corps, de sorte que cela définit par l'unité d'éclairage et par l'unité de réception de lumière une zone de balayage (16, 20, 28, 32, 38, 48, 52, 72) d'une unité de balayage (14, 18, 26, 30, 36, 46, 50) qui comprend l'unité d'éclairage et l'unité de réception de lumière,
**caractérisé en ce que**
- on utilise au moins deux unités de balayage de ce type (26, 30, 36, 46, 50) avec chacune une zone de balayage (28, 32, 38, 48, 52), telles que les zones de balayage se chevauchent au moins partiellement dans une zone de chevauchement (40),
- au moins lorsque le corps (10) se trouve avec sa surface dans une zone de chevauchement dans laquelle les zones de balayage d'au moins deux unités de balayage (26, 30, 36, 46, 50) se chevauchent, la sensibilité de balayage de l'une au moins des unités de balayage (26, 30, 36, 46, 50) est réduite pour la zone de chevauchement (40), la réduction de la sensibilité de balayage de l'une au moins des unités de balayage étant obtenue par réduction de l'intensité et/ou raccourcissement du temps d'éclairage pour au moins la partie de l'unité d'éclairage qui éclaire la zone de chevauchement, et/ou par réduction de la sensibilité de réception de la partie au moins de l'unité de réception de lumière sur laquelle tombe la lumière réfléchie provenant de la zone de chevauchement, et/ou par désactivation de la partie au moins de l'unité d'éclairage qui éclaire la zone de chevauchement.

2. Procédé de balayage selon la revendication 1,
**caractérisé en ce que** la position et/ou l'orientation et/ou la géométrie du corps (10) est déterminée par référence à l'une au moins des unités de balayage, et à partir de la position et/ou de l'orientation et/ou de la géométrie, on détermine quand le corps (10) se trouve avec sa surface dans la zone de chevauchement d'au moins deux unités de balayage (26, 30, 36, 46, 50).

3. Procédé de balayage selon l'une des revendications 1 ou 2, **caractérisé en ce que** le corps (10) et l'une au moins des unités de balayage (26, 30, 36, 46, 50) sont déplacés l'un par rapport à l'autre, de préférence en faisant passer le corps (10) devant l'unité d'éclairage et l'unité de réception de lumière.

4. Procédé de balayage selon les revendications 2 et 3,
**caractérisé en ce que** l'on détermine la position et/ou l'orientation et/ou la géométrie du corps avant que le corps (10) se trouve dans la zone de chevauchement d'au moins deux unités de balayage (26, 30, 36, 46, 50).

5. Procédé de balayage selon l'une des revendications 1 à 4,
**caractérisé en ce que**
- pendant que le corps (10) est balayé, on vérifie s'il se présente une zone avec suréclairage au niveau d'une unité de réception de lumière d'une unité de balayage (14, 18, 26, 30, 36, 46, 50), et
- s'il se présente un suréclairage, ou bien on réduit l'intensité d'au moins une partie d'une unité d'éclairage d'au moins une unité de balayage (14, 18, 26, 30, 36, 46, 50) qui éclaire la zone avec suréclairage, ou bien on réduit la sensibilité de réception d'au moins une partie d'une unité de réception de lumière d'au moins une unité de balayage qui reçoit la lumière provenant de cette zone.

6. Procédé de balayage selon la revendication 5,
**caractérisé en ce que**, au moins lorsqu'on constate un suréclairage au niveau d'une unité de réception de lumière qui reçoit la lumière provenant de la zone de chevauchement, on réduit la sensibilité de balayage de l'une au moins des unités de balayage, tout au moins pour la zone de chevauchement.

7. Procédé de balayage selon l'une des revendications 1 à 6,
**caractérisé en ce que** la sensibilité de balayage de toutes les unités de balayage avec des zones de balayage qui se chevauchent au moins partiellement est réduite de la même amplitude au moins pour une partie de la zone de chevauchement.

8. Procédé de balayage selon l'une des revendications 1 à 7,
**caractérisé en ce que** l'on utilise au moins une unité de balayage (14, 18, 26) qui est conçue et/ou agencée de telle façon qu'une partie aussi grande que possible de la surface du corps (10, 60) peut être balayée par une unité de balayage.

9. Procédé de balayage selon la revendication 8,
**caractérisé en ce que** l'on utilise au moins une unité de balayage (14, 18) avec une zone de balayage mobile (16, 20), de préférence capable de pivoter.

10. Procédé de balayage selon l'une des revendications 8 ou 9,
**caractérisé en ce que** l'on détermine, à partir de la position et/ou de l'orientation et/ou de la géométrie du corps (10), une direction et/ou une position de balayage d'au moins une unité de balayage (14, 18), de telle manière qu'il est possible de balayer depuis celle-ci une partie aussi grande que possible de la surface du corps (10), de préférence au moins deux côtés.

11. Procédé de balayage selon l'une des revendications 1 à 10,
**caractérisé en ce que** le corps (10, 60) est déplacé par rapport à ladite au moins une zone de balayage, de préférence en faisant passer le corps devant l'unité d'éclairage et l'unité de réception de lumière.

12. Procédé de balayage selon les revendications 9, 10 et 11,
**caractérisé en ce que** la zone de balayage (16, 20) de l'unité de balayage (14, 18) est établie de telle manière que l'unité de balayage présente la direction de balayage et/ou la position déterminée avant que le corps (10) pénètre dans la zone de balayage (16, 20).

13. Procédé de balayage selon les revendications 9 et 11,
**caractérisé en ce que** la zone de balayage d'au moins une unité de balayage (14) avec zone de balayage mobile (16) est déplacée pendant le mouvement relatif du corps (60) et de l'unité de balayage (14), de préférence par pivotement, de telle sorte que la zone de balayage (16) suit le corps (60).

14. Procédé de balayage selon l'une des revendications 1 à 13,
**caractérisé en ce que** l'on emploie au moins une unité de balayage qui comprend au moins un élément de déflexion (70), de préférence un miroir.

15. Procédé de balayage selon la revendication 14,
**caractérisé en ce que** le corps (10) est tout d'abord amené dans une première zone de balayage (28) d'une première unité de balayage (26), et après avoir quitté la première zone de balayage (28) il est amené dans une seconde zone de balayage (72) d'une seconde unité de balayage qui permet un balayage d'une zone de surface (82, 84) du corps qui n'a pas été entièrement palpée par la première zone de balayage (28), et la seconde unité de balayage comprend l'unité d'éclairage et l'unité de réception de lumière de la première unité de balayage (26) et au moins un élément de déflexion, de préférence un miroir (70), qui n'est éclairé par l'unité d'éclairage que lorsque le corps (10) ne se trouve pas dans la première zone de balayage.

16. Procédé de balayage selon la revendication 14 ou 15,
**caractérisé en ce que** l'on utilise au moins un élément de déflexion afin d'orienter la zone de balayage de ladite au moins une unité de balayage de telle façon qu'elle est traversée par un corps à balayer que l'on fait passer devant cette unité.

17. Procédé de balayage selon l'une des revendications 1 à 16,
**caractérisé en ce que** l'on utilise plusieurs unités de balayage, parmi lesquelles au moins deux partagent une unité d'éclairage dont la lumière est subdivisée vers les unités de balayage par un ou plusieurs diviseurs de rayonnement.

18. Procédé de balayage selon l'une des revendications 1 à 17,
**caractérisé en ce que** l'unité de réception de lumière et l'unité d'éclairage d'une unité de balayage (14, 18, 26, 30, 36, 46, 50) sont agencées au voisinage l'une de l'autre de telle façon que la lumière qui est réfléchie par le corps (10, 60) vers l'unité de réception de lumière emprunte sensiblement le trajet opposé à la lumière qui est émise par l'unité d'éclairage à travers la zone de balayage (16, 20, 28, 32, 38, 48, 52, 72) vers le corps (10, 60).

19. Dispositif de balayage pour le balayage optique d'au moins une surface partielle d'un corps (10, 60), comprenant
- au moins une unité d'éclairage pour éclairer au moins une partie d'un champ de lecture (34),
- au moins une unité de réception de lumière pour recevoir la lumière éventuellement réfléchie depuis le champ de lecture (34) et pour générer un signal de réception, de sorte que cela définit par le trajet de la lumière depuis l'unité d'éclairage vers l'unité de réception de lumière une zone de balayage (16, 20, 28, 32, 38, 48, 52, 72) d'une unité de balayage (14, 18, 26, 30, 36, 46, 50), et
- une unité d'évaluation pour évaluer le signal de réception,
**caractérisé par**
- au moins deux unités de balayage de ce type (26, 30, 36, 46, 50) avec des zones de balayage (28, 32, 38, 48, 52) qui se chevauchent, et
- une unité de commande pour commander la sensibilité de balayage de telle manière que, au moins quand un corps (10) se trouve avec sa surface dans la zone de chevauchement dans laquelle les zones de balayage (28, 32, 38, 48, 52) d'au moins deux unités de balayage (26, 30, 36, 46, 50) se chevauchent, la sensibilité de balayage de l'une au moins des unités de balayage (26, 30, 36, 46, 50) est susceptible d'être réduite pour la zone de chevauchement (40), la réduction de l'unité de balayage de l'une au moins des unités de balayage étant obtenue par réduction de l'intensité et/ou par raccourcissement du temps d'éclairage au moins pour la partie de l'unité d'éclairage qui éclaire la zone de chevauchement, et/ou par réduction de la sensibilité de réception d'au moins la partie de l'unité de réception de lumière sur laquelle tombe la lumière réfléchie provenant de la zone de chevauchement, et/ou par désactivation de la partie au moins de l'unité d'éclairage qui éclaire la zone de chevauchement.

20. Dispositif de balayage selon la revendication 19,
**caractérisé par** un dispositif de détermination pour déterminer la position et/ou l'orientation et/ou la géométrie d'un corps à balayer (10) par référence à ladite au moins une unité d'éclairage et/ou ladite au moins une unité de réception de lumière.

21. Dispositif de balayage selon l'une des revendications 19 ou 20,
**caractérisé par** un dispositif de transport (12) pour le transport du corps (10, 60) à travers le champ de lecture (34).

22. Dispositif de balayage selon la revendication 21,
**caractérisé en ce que** le dispositif de détermination est agencé en amont du champ de lecture (34).

23. Dispositif de balayage selon l'une des revendications 19 à 22, **caractérisé par** des moyens pour déterminer l'intensité d'éclairage sur au moins une partie d'au moins une unité de réception de lumière.

24. Dispositif de balayage selon l'une des revendications 19 à 23,
**caractérisé en ce qu'**au moins une unité de balayage (14, 18, 26) est agencée et/ou conçue de telle façon qu'il est possible de balayer avec elle une partie aussi grande que possible de la surface du corps (10, 60).

25. Dispositif de balayage selon la revendication 24,
**caractérisé par** au moins une unité de balayage (14, 18) avec une zone de balayage (16, 20) mobile, de préférence capable de pivoter.

26. Dispositif de balayage selon la revendication 25,
**caractérisé par** un dispositif de commande, qui déplace la zone de balayage d'au moins une unité de balayage (14) avec zone de balayage mobile (16), de préférence par pivotement, pendant le déplacement relatif du corps (60) et de l'unité de balayage (14), de telle manière que la zone de balayage (16) suit le corps (60).

27. Dispositif de balayage selon l'une des revendications 24 à 26,
**caractérisé en ce qu'**au moins une première et une seconde unité de balayage partagent une unité d'éclairage et une unité de réception de lumière, et la zone de balayage (72) de la seconde unité de balayage comprend additionnellement un élément de déflexion, de préférence un miroir (70) qui est agencé de telle façon qu'il n'est éclairé par l'unité d'éclairage que lorsque aucun corps (10) ne se trouve dans la zone de balayage (28) de la première unité de balayage (26).

28. Dispositif de balayage selon l'une des revendications 19 à 27,
**caractérisé en ce qu'**au moins une unité de balayage comprend au moins un élément de déflexion (70), de préférence un miroir.

29. Dispositif de balayage selon l'une des revendications 19 à 28,
**caractérisé par** au moins un diviseur de rayonnement pour diviser la lumière d'une unité d'éclairage vers plusieurs unités de balayage.

30. Dispositif de balayage selon l'une des revendications 19 à 29,
**caractérisé en ce que** l'unité de réception de lumière et l'unité d'éclairage d'une unité de balayage (14, 18, 26, 30, 36, 46, 50) sont agencées au voisinage l'une de l'autre de telle façon que la lumière qui est réfléchie par le corps (10, 60) vers l'unité de réception de lumière emprunte sensiblement le trajet opposé à la lumière qui est émise par l'unité d'éclairage à travers la zone de balayage (16, 20, 28, 32, 38, 48, 52, 72) vers le corps (10, 60).

31. Dispositif de balayage selon l'une des revendications 19 à 30,
**caractérisé en ce que** l'unité d'éclairage de ladite au moins une unité de balayage (14, 18, 26, 30, 36, 46, 50) comprend un certain nombre de diodes électroluminescentes, de préférence agencées dans une rangée.

32. Dispositif de balayage selon l'une des revendications 19 à 31,
**caractérisé en ce que** l'unité de réception de lumière de ladite au moins une unité de balayage (14, 18, 26, 30, 36, 46, 50) comprend un certain nombre de capteurs CMOS ou de capteurs CCD, de préférence agencés dans une rangée.
